# EUROPÄISCHE PATENTSCHRIFT

(11) **EP 2 536 773 B1**
(45) Veröffentlichungstag und Bekanntmachung des Hinweises auf die Patenterteilung: **09.04.2014**
(21) Anmeldenummer: 11702847.2
(22) Anmeldetag: 14.02.2011
(51) Int. Cl.: C08G 12/40, C08G 12/42

(54) **SILYLIERTE AMINOPLASTHARZE**
SILYLATED AMINO RESINS
RÉSINES AMINOPLASTES SILYLÉES

(30) Priorität: 16.02.2010 EP 10153705
(43) Veröffentlichungstag der Anmeldung: 26.12.2012
(73) Patentinhaber: BASF SE, 67056 Ludwigshafen (DE)
(72) Erfinder: NOLLER, Bastian, 64653 Lorsch (DE); SCHWALM, Reinhold, 67157 Wachenheim (DE); RÖSCH, Christine, 55127 Mainz (DE); BREINER, Thomas, 69514 Laudenbach (DE); STUMBE, Jean-Francois, 67200 Strasbourg (FR); HAAF, Christina, 69502 Hemsbach (DE)
(86) Internationale Anmeldenummer: PCT/EP2011/052094
(87) Internationale Veröffentlichungsnummer: WO 2011/101301

(56) Entgegenhaltungen:
- EP-A2- 1 473 320
- US-A- 4 280 938
- US-A- 4 281 091

## Beschreibung

Die vorliegende Erfindung betrifft silylierte Aminoplastharze, Verfahren zu deren Herstellung, deren Verwendung und solche enthaltende Beschichtungsmassen.

Pigmentierte Lacke und Klarlacke aus oder auf Basis von Aminoplastharzen sind seit einigen Jahrzehnten bekannt.

In Römpps Chemielexikon werden Aminoplaste beschrieben als "meist relativ niedermolekulare Polykondensationsprodukte aus Carbonyl-Verbindungen (insbesondere Formaldehyd, neuerdings auch höhere Aldehyde und Ketone), nucleophilen Komponenten (alle H-aciden Verbindungen, die an der Kondensationsstelle ein ungebundenes Elektronenpaar aufweisen) und NH-Gruppen enthaltende Verbindungen wie z. B. Harnstoff (Harnstoffharze), Melamin (Melaminharze, z. B. Melamin-Formaldehyd-Harze), Urethane (Urethanharze), Cyanamid bzw. Dicyanamid (Cyanamidharze bzw. Dicyanamidharze), aromatische Amine (Anilinharze) und Sulfonamide (Sulfonamidharze), die in einer Kondensationsreaktion miteinander verknüpft werden".

Unter den Aminoplastharzen sind insbesondere Melamin-Formaldehyd-Harze aufgrund ihrer günstigen Eigenschaften in Beschichtungsmassen weit verbreitet.

Nichtplastifizierte Melamin-Formaldehyd-Harze dienen entweder allein oder in Kombination mit weiteren chemisch verschiedenen Vernetzern, beispielsweise blockierten Polyisocyanaten, Trisalkylcarbamoyltriazinen (TACT) oder Epoxiden, als vernetzende Komponente in Bindemittelmischungen. Nach Härtung der Lackbestandteile erhält man eine Beschichtung, welche beständig ist gegen chemische, mechanische und witterungsbedingte Einflüsse. Plastifizierte Melamin-Formaldehyd-Harze können Modifizierungen mit Carbamatstrukturen, Abmischungen mit Polyestern oder Alkydharzen bzw. Vorkondensationen mit diesen, aufweisen. Nichtplastifizierte Melamin-FormaldehydHarze benötigen im Falle der Verwendung auf nicht formstabilen, flexiblen Beschichtungssubstraten eine äußere Elastifizierung, damit die Beschichtung nicht reißt; die Vernetzer als alleiniger Formulierungsbestandteil bilden lediglich spröde Netzwerke.

Melamin-Formaldehyd-Harze lassen sich nach Anwendungsgebieten (Formmassen, Leime, Tränkharze, Lacke), Alkylierungsstoffen (Veretherung mit Butanol, Methanol, Mischveretherung) oder wie hier aufgeführt nach dem Verhältnis aus Triazin : Formaldehyd : Veretherungsalkohol charakterisieren:
1. vollständig bis hoch methylolierte und vollalkylierte bis hochalkylierte Harze (HMMM-Typen)
2.1 teilmethylolierte und hochalkylierte Harze (High Imino Typen)
2.2. teilmethylolierte und teilalkylierte Harze (Methylol Typen)
3. niedrig methylolierte Harze (Melamin-Formaldehyd-Kondensate)

Die erste große Gruppe der vollständig veretherten Melamin-Formaldehyd-Harze, bei denen das sogenannte Einbaumolverhältnis Melamin:Formaldehyd:Alkohol theoretisch 1:6:6, in der Praxis in der Regel 1 :>5,5:>5,0 und meist 1 :>5,5:>4,5 beträgt, zeichnen sich durch ein ausgesprochen gutes High solids-Verhalten (relativ niedrige Viskosität bei hohem Feststoffgehalt) aus. Bei dieser Vernetzergruppe lässt sich der freie Formaldehyd aufgrund der niedrigen Viskosität des Aminoharzes leicht reduzieren. Derzeit erreichbar ist ein Gehalt an freiem Formaldehyd < 0,3 Gew%. Dabei enthalten die Handelsprodukte als Alkohol zumeist Methanol, es sind aber auch gemischtveretherte oder vollständig butylierte Typen bekannt.

Die vollständig veretherten Melamin-Formaldehyd-Harze werden in der Praxis bevorzugt in Beschichtungen von Gebinden (Can-Coating) und Metallbändern (Coil-Coatings) weltweit und in NAFTA auch für alle Schichten der Automobillackierung eingesetzt.

Die geringe thermische Reaktivität bei Einbrennbedingungen, wie 20 Minuten bei 140°C, erfordert für diese vollständig veretherten Melamin-Formaldehyd-Harze die Katalyse mit starken Säuren. Dadurch erhält man eine sehr schnelle Härtung, durch Umetherung mit dem Bindemittel unter Freisetzung der Veretherungsalkohole ein homogenes Conetzwerk. Mit dieser Katalyse mit starken Säuren sind sehr kurze Aushärtungszeiten, wie bei teilmethylolierten Melamin-Formaldehyd-Harzen möglich. Während der Vernetzung ist eine Formaldehydemission möglich, die deutlich über dem freien Formaldehyd liegt und in der Rückspaltung von Methylolgruppen begründet ist.

Die zweite große Gruppe der teilweise veretherten Melamin-Formaldehyd-Harze, die in der Praxis zumeist ein Einbaumolverhältnis Melamin:Formaldehyd:Alkohol von 1 : 3 bis 5,4 : 2 bis 4,3 zeichnen sich durch eine im Vergleich zur ersten Gruppe deutlich erhöhten thermischen Reaktivität ohne Säurekatalyse aus. Während der Produktion dieser Vernetzer findet eine Eigenkondensation statt, die zu einer höheren Viskosität (geringeres High solids-Verhalten) führt und dadurch die Entfernung des freien Formaldehyd bei der Destillation erschwert. Für diese Produkte sind ein Gehalt an freiem Formaldehyd von 0,5 bis 1,5% Standard, jedoch gibt es auch Produkte mit einem Gehalt an freiem Formaldehyd von 0,3 bis 3 Gew%. Auch hier sind als Handelsprodukte methylierte, butylierte sowie gemischt veretherte Typen weit verbreitet. Die Veretherung mit weiteren Alkylierungsstoffen ist in der Literatur beschrieben bzw. als spezielle Produkte erhältlich.

High-Imino- und Methylol-Typen als jeweilige Untergruppe weisen beide eine unvollständige Methylolierung, d.h. Formaldehyd-Einbaumolverhältnisse von weniger als 1 : 5,5, auf. Die High-Imino-Typen unterscheiden sich von den Methylol-Typen jedoch durch einen hohen Alkylierungsgrad, d.h. dem Anteil der veretherten Methylolgruppen an den eingebauten Formaldehyd-Äquivalenten, von meist bis zu 80 %, wohingegen die Methylol-Typen in der Regel < 70 % aufweisen.

Einsatzgebiete für die teilmethylolierten Melamin-Formaldehyd-Harze erstrecken sich über alle Anwendungsbereiche, auch in Kombination mit HMMM Typen zur Reaktivitätsanpassung, wo Härtungstemperaturen 100 bis 150°C gefordert sind. Eine zusätzliche Katalyse mit Hilfe schwacher Säuren ist möglich und gängige Praxis.

Neben der Reaktion des Aminoharzes mit dem Bindemittel findet ein deutlich erhöhter Anteil an Eigenvemetzung des Vernetzers mit sich selbst statt. Die Folge ist eine reduzierte Elastizität des Gesamtsystems, welche durch die geeignete Auswahl des Kombinationspartners ausgeglichen werden muss. Vorteilhaft dagegen ist die reduzierte Gesamtformaldehydemission aus den daraus hergestellten Beschichtungen.

Neben Aminoharzen, insbesondere Melamin-Formaldehyd-Harzen, mit nur einem Veretherungsalkohol erlangen gemischtveretherte Produkte zunehmend an Bedeutung.

EP 1784466 beschreibt Beschichtungsmassen aus Melamin-Formaldehyd-Harzen mit hydroxyfunktionellen Silanen.

Nachteilig daran ist, daß die hydroxyfunktionellen Silane aufwendig in einer Polymerisation hergestellt werden müssen.

US 2004/214017 sind Umsetzungsprodukte von Melamin-Formaldehyd-Harzen mit epoxy- oder isocyanatfunktionalisierten Silanen beschrieben.

Nachteilig an diesen Verbindungen ist, daß diese funktionalisierten Silane bei der Umsetzung mit dem Melamin-Formaldehyd-Harz eine zusätzliche Funktionalität, beispielsweise eine Hydroxy- oder Harnstoffgruppe erzeugen, die ihrerseits mit dem Melamin-Formaldehyd-Harz reagiert (Hydroxygruppe) bzw. die Löslichkeit des Produkts vermindert (Harnstoffgruppe).

Alkoxysilanmodifizierte Melamin-Formaldehyd-Harze wurden bereits in der unveröffentlichten Europäischen Patentanmeldung mit dem Aktenzeichen 09172660.4 und dem Einreichedatum 9. Oktober 2009 beschrieben. Nachteilig an diesen Verbindungen ist der aminische Stickstoff, welcher zur Beschleunigung der Härtung eingesetzte Säuren bindet und somit ihre katalytische Wirkung vermindert.

Eine weitere Gruppe des Aminoplastharze, die sich in Aufbau und Eigenschaften sehr ähnlich zu den Melamin-Formaldehyd-Harzen verhalten, sind die Benzoguanaminharze (Benzoguanamin/Formaldehydharze). Freie OH-Gruppen können auch zumindest teilweise mit niederen Alkoholen, besonders C₁-C₄-Alkoholen, besonders bevorzugt Methanol oder n-Butanol, verethert sein.

Als weitere Aminoplastharze zu nennen sind beispielsweise Harnstoffharze, also Polykondensationsprodukte von Harnstoff und Formaldehyd (Kurzbezeichnung UF, nach DIN EN ISO 1043-1: 2002-6). Freie OH-Gruppen können auch zumindest teilweise mit niederen Alkoholen, besonders C₁-C₄-Alkoholen, besonders bevorzugt Methanol oder n-Butanol, verethert sein.

Aufgabe der vorliegenden Erfindung war es, neue Modifizierungen für Aminoplastharze zur Verfügung zu stellen, die über angebundene Silylgruppen einen zusätzlichen Härtungsmechanismus aufweisen und Beschichtungen mit verbesserten Eigenschaften ergeben.

Die Aufgabe wurde gelöst durch ein Verfahren zur Herstellung von silylgruppentragenden Aminoplastharzen, in dem man
- in einem ersten Schritt mindestens ein optional verethertes Aminoplastharz (A) mit mindestens einem ungesättigten Alkohol (B), der mindestens eine C=C-Doppelbindung und mindestens eine Hydroxygruppe trägt, ver- oder umethert und
- anschließend an zumindest einen Teil der so an das Aminoplastharz gebundenen C=C-Doppelbindungen durch eine Hydrosilylierung mindestens eine Silanverbindung (C), die mindestens eine Si-H-Bindung trägt, addiert.

Durch den speziellen zweischrittigen Aufbau der Verbindungen enthalten erfindungsgemäß erhaltenen Aminoplastharze nicht die oben erwähnte störende Aminstrukturen.

Bei den Aminoplastharzen (A) kann es sich bevorzugt um Melamin-Formaldehyd-Harze, Benzoguanamin/Formaldehydharze und Harnstoff/Formaldehydharze handeln, die jeweils optional zumindest teilweise verethert sein können und bevorzugt zumindest teilweise verethert sind.

Besonders bevorzugt handelt es sich um zumindest teilweise veretherte MelaminFormaldehyd-Harze oder Benzoguanamin/Formaldehydharze, ganz besonders bevorzugt um zumindest teilweise veretherte Melamin-Formaldehyd-Harze.

Erfindungsgemäß als Aminoplastharze (A) einsetzbare Melamin-Formaldehyd-Harze sind beispielsweise wie folgt aufgebaut:
Wie eingangs erwähnt werden Melamin-Formaldehyd-Harze häufig über das Einbaumolverhältnis Melamin:Formaldehyd:Alkohol charakterisiert. Dabei ist der Alkohol bevorzugt ausgewählt aus der Gruppe bestehend aus Methanol, Ethanol, iso-Butanol und n-Butanol oder deren Gemische, bevorzugt ausgewählt aus der Gruppe bestehend aus Methanol und n-Butanol.

Erfindungsgemäß einsetzbare Melamin-Formaldehyd-Harze können ein Einbaumolverhältnis 1:2 bis 6:1 bis 6 aufweisen, wobei in Einzelfällen durch Bildung von Oligoformalketten auch ein Formaldehyd-Einbauverhältnis bis zu 8 denkbar sein kann.

Bevorzugt sind Einbaumolverhältnisse von 1:3 bis 6:1,5 bis 6.

Für methylveretherte Melamin-Formaldehyd-Harze sind Einbaumolverhältnisse von 1:3,6 bis 5,7:2,1 bis 4,7 besonders bevorzugt, ganz besonders bevorzugt sind Einbaumolverhältnisse von 1:5 bis 6:3,5 bis 6, insbesondere 1:5 bis 6:4,0 bis 5,0.

Für n-butylveretherte Melamin-Formaldehyd-Harze sind Einbaumolverhältnisse von 1:3,2 bis 5,7:1,3 bis 4 besonders bevorzugt, ganz besonders bevorzugt sind Einbaumolverhältnisse von 1:5 bis 6:3,5 bis 6, insbesondere 1:5 bis 6:3,5 bis 4,5.

Die einsetzbaren Melamin-Formaldehyd-Harze können nicht nur eine Melamingruppe pro Polykondensat aufweisen sondern durchaus auch mehrere, bevorzugt bis zu sechs, besonders bevorzugt bis zu vier, ganz besonders bevorzugt bis zu drei und insbesonders bis zu zwei.

Erfindungsgemäß als Aminoplastharze einsetzbare Benzoguanamin/Formaldehydharze sind beispielsweise wie folgt aufgebaut

Auch Benzoguanamin-Formaldehyd-Harze werden häufig über das Einbaumolverhältnis Benzoguanamin:Formaldehyd:Alkohol charakterisiert. Dabei ist der Alkohol bevorzugt ausgewählt aus der Gruppe bestehend aus Methanol, Ethanol, iso-Butanol und n-Butanol oder deren Gemische, bevorzugt ausgewählt aus der Gruppe bestehend aus Methanol und n-Butanol.

Erfindungsgemäß einsetzbare Benzoguanamin-Formaldehyd-Harze können ein Einbaumolverhältnis 1:1,5 bis 4:1 bis 4 aufweisen, wobei in Einzelfällen durch Bildung von Oligoformalketten auch ein Formaldehyd-Einbauverhältnis bis zu 6 denkbar sein kann.

Bevorzugt sind Einbaumolverhältnisse von 1:2 bis 4:1,5 bis 4.

Für methylveretherte Benzoguanamin -Formaldehyd-Harze sind Einbaumolverhältnisse von 1:2,2 bis 3,7:2,1 bis 3,0 besonders bevorzugt, ganz besonders bevorzugt sind Einbaumolverhältnisse von 1:3 bis 4:1,5 bis 4, insbesondere 1:3 bis 4:2,0 bis 3,0.

Für n-butylveretherte Benzoguanamin -Formaldehyd-Harze sind Einbaumolverhältnisse von 1:2,2 bis 3,7:1,3 bis 2 besonders bevorzugt, ganz besonders bevorzugt sind Einbaumolverhältnisse von 1:3 bis 4:1,5 bis 4, insbesondere 1:3 bis 4:1,5 bis 2,5.

Die einsetzbaren Benzoguanamin -Formaldehyd-Harze können nicht nur eine Benzoguanamingruppe pro Polykondensat aufweisen sondern durchaus auch mehrere, bevorzugt bis zu fünf, besonders bevorzugt bis zu vier, ganz besonders bevorzugt bis zu drei und insbesonders bis zu zwei.

Erfindungsgemäß als Aminoplastharze einsetzbare Harnstoff/Formaldehydharze sind beispielsweise wie folgt aufgebaut

Erfindungsgemäß einsetzbare Harnstoff-Formaldehyd-Harze können ein Einbaumolverhältnis von Harnstoff / Formaldehyd / Alkohol von 1:1-4: 0,3:3, bevorzugt 1 : 1-3 : 0,4-2, besonders bevorzugt 1 : 1,5-2,5 : 0,5-1,5, ganz besonders bevorzugt von 1: 1,6-2,1 : 0,6-1,3 aufweisen.

Dabei ist der Alkohol bevorzugt ausgewählt aus der Gruppe bestehend aus Methanol, Ethanol, iso-Butanol und n-Butanol oder deren Gemische, bevorzugt ausgewählt aus der Gruppe bestehend aus Methanol und n-Butanol.

Zu den Harnstoff/Formaldehyd-Harzen gehören auch sogenannte Glycolurilharze, die durch Umsetzung von Glycoluril, dem Umsetzungsprodukt von Glyoxal mit zwei Äquivalenten Harnstoff, mit Formaldehyd entstehen, optional verethert mit einem oder mehreren Alkoholen.

Ein weiterer Gegenstand der vorliegenden Erfindung sind silylierte Melamin-Formaldehyd-Harze der Formel (I) 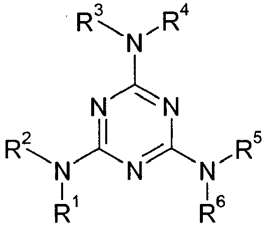 worin die Reste R¹ bis R⁶ jeweils unabhängig voneinander
a) ein Wasserstoffatom (-H) als Rest,
b) -[-CH₂-O-]ₘ-H,
   worin m eine positive ganze Zahl von mindestens 1 bedeutet,
C) -[-CH₂-O-]ₙ-R⁷,
   worin n eine positive ganze Zahl von mindestens 1 und
   R⁷ einen Alkylrest bedeuten,
d) einen Rest der Formel (II) 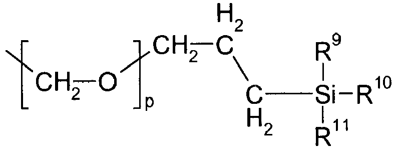 worin p eine positive ganze Zahl von mindestens 1,
   R⁹ bis R¹¹ unabhängig voneinander bedeuten können
   - einen Alkylrest oder
   - einen Rest -O-R¹²,
   worin
   R¹² ein Alkyl- oder Arylrest
   - einen Rest der Formel (IIIa) 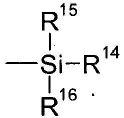 oder
   - einen Rest der Formel (IIIb) 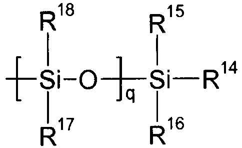
   worin R¹⁴ bis R¹⁸ unabhängig voneinander bedeuten können Alkyl, Aryl, Alkyloxy, Aryloxy, Cycloalkyl und Cycloalkyloxy,
   und q eine positive ganze Zahl von mindestens 1 bedeutet,
e) einen Rest der Formel (IV) 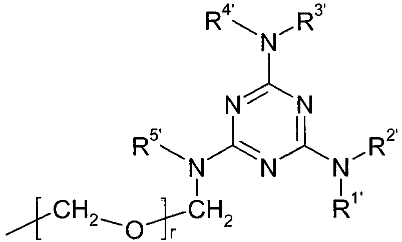
worin r Null oder eine positive ganze Zahl von mindestens 1 bedeuten kann und
die Reste R^{1'} bis R^{5'} jeweils unabhängig voneinander ausgewählt sein können aus den Gruppen a) bis d),
bedeuten können,
mit der Maßgabe, daß mindestens einer der Reste R¹ bis R⁶, sowie der Reste R^{1'} bis R⁵', sofern sie anwesend sind, ein Rest der Formel (II) ist und nicht mehr als zwei Reste R¹ bis R⁶ jeweils einen Rest der Formel (IV) darstellen.

Die erfindungsgemäßen silylierten Melamin-Formaldehyd-Harze zeigen gegenüber den unmodifizierten Melamin-Formaldehyd-Harzen einen höheren Glanz und/oder eine verbesserte Kratzfestigkeit.

Die Variablen in der obigen Formel (I) haben folgende Bedeutung:
R⁷ bedeutet Alkyl, bevorzugt C₁- bis C₄-Alkyl, besonders bevorzugt Methyl, Ethyl, *iso-*Butyl oder n-Butyl, ganz besonders bevorzugt Methyl oder n-Butyl und insbesondere Methyl.

Unter Alkyl werden im Rahmen der vorliegenden Schrift geradkettige oder verzweigte Alkylgruppen mit einem bis 20 Kohlenstoffatomen verstanden, bevorzugt C₁ - C₈-Alkylgruppen, also beispielsweise Methyl-, Ethyl-, n-Propyl-, iso-Propyl-, n-Bu-tyl-, iso-Butyl-, 2-Butyl-, tert.-Butyl-, 1-Pentyl, 2-Pentyl, iso-Amyl, n-Hexyl, n-Octyl oder 2-Ethylhexyl.

Unter C₁ - C₄-Alkyl wird in dieser Schrift Methyl-, Ethyl-, n-Propyl-, iso-Propyl-, n-Butyl-, iso-Butyl-, 2-Butyl-, oder tert.-Butyl- verstanden.

R⁹ bis R¹¹ seien voneinander unabhängig Alkyl, ein Rest der Formel -O-R¹², oder der Formel (IIIa) oder (IIIb), bevorzugt ein Rest der Formel -OR¹², besonders bevorzugt mit R¹² Alkyl, ganz besonders bevorzugt Methyl oder Ethyl und insbesondere Ethyl.

Die Reste R^{1'} bis R^{5'} können jeweils unabhängig voneinander ausgewählt sein können aus den Gruppen a) bis d). Es versteht sich von selbst, daß die Reste R^{1'} bis R^{5'} nur dann in dem erfindungsgemäßen silylierten Melamin-Formaldehyd-Harzen anwesend sind, wenn mindestens einer der Reste R¹ bis R⁶ einen Rest der Formel (IV) bedeutet.

m bedeutet eine positive ganze Zahl von 1 bis 4, bevorzugt von 1 bis 3, besonders bevorzugt von 1 bis 2 und ganz besonders bevorzugt 1.

n bedeutet eine positive ganze Zahl von 1 bis 4, bevorzugt von 1 bis 3, besonders bevorzugt von 1 bis 2 und ganz besonders bevorzugt 1.

p bedeutet Null oder eine positive ganze Zahl von 1 bis 4, bevorzugt von 0 bis 3, besonders bevorzugt von 0 bis 2, ganz besonders bevorzugt Null oder 1 und insbesondere 1.

q bedeutet eine positive ganze Zahl von 1 bis 4, bevorzugt von 1 bis 3, besonders bevorzugt von 1 bis 2 und ganz besonders bevorzugt 1.

r bedeutet Null oder eine positive ganze Zahl von 1 bis 4, bevorzugt von 0 bis 3, besonders bevorzugt von 0 bis 2, ganz besonders bevorzugt Null oder 1 und insbesondere 1.

Bevorzugt stellt nicht mehr als einer der Reste R¹ bis R⁶ einen Rest der Formel (IV) dar, besonders bevorzugt lediglich einer oder keiner.

Ein weiterer Gegenstand der vorliegenden Erfindung sind silylierte Benzoguanamin-Formaldehyd-Harze der Formel (la) 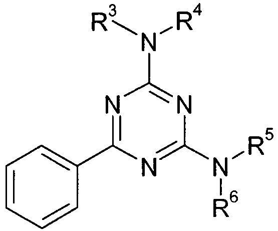 worin die Reste R³ bis R⁶ jeweils unabhängig voneinander
a) ein Wasserstoffatom (-H) als Rest,
b) -[-CH₂-O-]ₘ-H,
   worin m eine positive ganze Zahl von mindestens 1 bedeutet,
c) -[-CH₂-O-]ₙ-R⁷,
   worin n eine positive ganze Zahl von mindestens 1 und
   R⁷ einen Alkylrest bedeuten,
d) einen Rest der Formel (II) 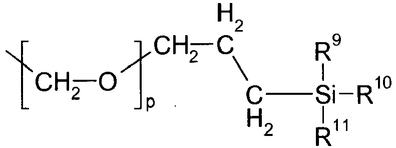 worin p eine positive ganze Zahl von mindestens 1, R⁹ bis R¹¹ unabhängig voneinander bedeuten können
   - einen Alkylrest oder
   - einen Rest -O-R¹²,
   worin
   R¹² ein Alkyl- oder Arylrest
   - einen Rest der Formel (IIIa) 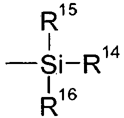 oder
   - einen Rest der Formel (IIIb) 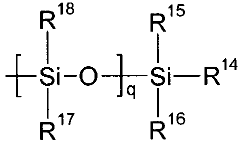
   worin R¹⁴ bis R¹⁸ unabhängig voneinander bedeuten können Alkyl, Aryl, Alkyloxy, Ary-loxy, Cycloalkyl und Cycloalkyloxy,
   und q eine positive ganze Zahl von mindestens 1 bedeutet,
e) einen Rest der Formel (IVa) 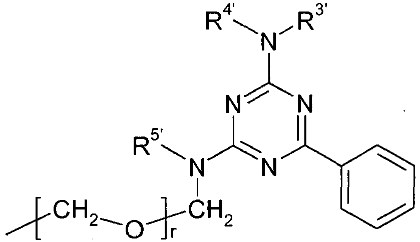 worin r Null oder eine positive ganze Zahl von mindestens 1 bedeuten kann und
   die Reste R^{3'} bis R^{5'} jeweils unabhängig voneinander ausgewählt sein können aus den Gruppen a) bis d),
   bedeuten können,
   mit der Maßgabe, daß mindestens einer der Reste R³ bis R⁶, sowie der Reste R^{3'} bis R^{5'}, sofern sie anwesend sind, ein Rest der Formel (II) ist und nicht mehr als zwei Reste R³ bis R⁶ jeweils einen Rest der Formel (IVa) darstellen.

Die erfindungsgemäßen silylierten Benzoguanamin-Formaldehyd-Harze zeigen gegenüber den unmodifizierten Benzoguanamin-Formaldehyd-Harzen einen höheren Glanz und/oder eine verbesserte Kratzfestigkeit.

Die Variablen in der obigen Formel (Ia) haben folgende Bedeutung:
R⁷ bedeutet Alkyl, bevorzugt C₁- bis C₄-Alkyl, besonders bevorzugt Methyl, Ethyl, *iso-*Butyl oder n-Butyl, ganz besonders bevorzugt Methyl oder n-Butyl und insbesondere Methyl.

Unter Alkyl werden im Rahmen der vorliegenden Schrift geradkettige oder verzweigte Alkylgruppen mit einem bis 20 Kohlenstoffatomen verstanden, bevorzugt C₁ - C₈-Alkylgruppen, also beispielsweise Methyl-, Ethyl-, n-Propyl-, iso-Propyl-, n-Bu-tyl-, iso-Butyl-, 2-Butyl-, tert.-Butyl-, 1-Pentyl, 2-Pentyl, iso-Amyl, n-Hexyl, n-Octyl oder 2-Ethylhexyl.

Unter C₁ - C₄-Alkyl wird in dieser Schrift Methyl-, Ethyl-, n-Propyl-, iso-Propyl-, n-Butyl-, iso-Butyl-, 2-Butyl-, oder tert.-Butyl- verstanden.

R⁹ bis R¹¹ seien voneinander unabhängig Alkyl, ein Rest der Formel -O-R¹², oder der Formel (IIIa) oder (IIIb), bevorzugt ein Rest der Formel -OR¹², besonders bevorzugt mit R¹² Alkyl, ganz besonders bevorzugt Methyl oder Ethyl und insbesondere Ethyl.

Die Reste R^{3'} bis R^{5'} können jeweils unabhängig voneinander ausgewählt sein können aus den Gruppen a) bis d). Es versteht sich von selbst, daß die Reste R^{3'} bis R^{5'} nur dann in dem erfindungsgemäßen silylierten Benzoguanamin-Formaldehyd-Harzen anwesend sind, wenn mindestens einer der Reste R³ bis R⁶ einen Rest der Formel (IVa) bedeutet.

m bedeutet eine positive ganze Zahl von 1 bis 4, bevorzugt von 1 bis 3, besonders bevorzugt von 1 bis 2 und ganz besonders bevorzugt 1.

n bedeutet eine positive ganze Zahl von 1 bis 4, bevorzugt von 1 bis 3, besonders bevorzugt von 1 bis 2 und ganz besonders bevorzugt 1.

p bedeutet Null oder eine positive ganze Zahl von 1 bis 4, bevorzugt von 0 bis 3, besonders bevorzugt von 0 bis 2, ganz besonders bevorzugt Null oder 1 und insbesondere 1.

q bedeutet eine positive ganze Zahl von 1 bis 4, bevorzugt von 1 bis 3, besonders bevorzugt von 1 bis 2 und ganz besonders bevorzugt 1.

r bedeutet Null oder eine positive ganze Zahl von 1 bis 4, bevorzugt von 0 bis 3, besonders bevorzugt von 0 bis 2, ganz besonders bevorzugt Null oder 1 und insbesondere 1.

Bevorzugt stellt nicht mehr als einer der Reste R³ bis R⁶ einen Rest der Formel (IVa) dar, besonders bevorzugt lediglich einer oder keiner.

Die erfindungsgemäßen silylierten Aminoplastharze sind beispielsweise erhältlich durch zweischrittige Umsetzung der entsprechenden Aminoplaste, beispielsweise der zu den Verbindungen der Formel (I) korrespondierenden Melamin-Formaldehyd-Harzen, d.h. Melamin-Formaldehyd-Harze der Formel (I), in denen der Rest der Formel (II) ersetzt ist durch eine Gruppe -[-CH₂-O-]ₚ-H. Im ersten Schritt wird diese Verbindung mit einem ungesättigten Monoalkohol (B), bevorzugt Allylalkohol, umgesetzt, an dessen Doppelbindung im nächsten Schritt durch übergangsmetall-, bevorzugt platinkatalysierte Hydrosilylierung eine Verbindung (C) der Formel (V) addiert wird.

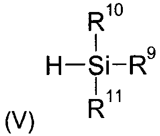

Wobei R⁹-R¹¹ die oben stehende Bedeutung haben.

Diese platinkatalysierte Hydrosilylierung wird häufig in der folgenden Weise durchgeführt: Das Umsetzungsprodukt des eingesetzten Aminoplastharzes (A) mit dem ungesättigten Monoalkohol (B) wird bei Umgebungstemperatur in einem Reaktionsbehälter, der mit einer Einrichtung zur Aufrechterhaltung einer Inertgasabdeckung, bevorzugt Stickstoff oder Argon ausgerüstet ist, unter Inertagasabdeckung mit dem Siliciumhydrid (V), gelöst in einem wasserfreien inerten Lösemittel, versetzt Unter Rühren zugesetzt wird ein Katalysator, wie beispielsweise ein Übergangsmetall, vorzugsweise ein Edelmetall der Nebengruppe VIII, besonders bevorzugt Nickel, Nickelsalze, Iridiumsalze und ganz besonders bevorzugt Chlorplatinsäure, wird dann zugesetzt. Die Temperatur wird unter Inertagasabdeckung auf etw 60°C erhöht. Die Reaktion kann durch NMR-Spektroskopie auf das Verschwinden des Multipletts des vinylischen Methin-Protons (-CH= 5,9 ppm in CDCl₃) der Allylgruppe überwacht werden.

Das eingesetzte Aminoplastharz kann mindestens ein Lösungsmittel enthalten, beispielsweise Wasser, C₁-C₄-Alkylalkohole, wie beispielsweise Methanol, Ethanol, *iso-*Propanol, n-Propanol, n-Butanol, *iso*-Butanol, sek-Butanol oder *tert*-Buta-nol, oder aromatische Kohlenwasserstoffe, wie beispielsweise Toluol oder Xylol-Isomerengemische.

Der Gehalt an freiem Formaldehyd des eingesetzten Aminoplastharzes beträgt in der Regel nicht mehr als 1,5 Gew%, beispielsweise kann er nicht mehr als 1,0, bevorzugt nicht mehr als 0, , besonders bevorzugt nicht mehr als 0,3und ganz besonders bevorzugt nicht mehr als 0,1 Gew% betragen.

Bei der Verbindung (B) handelt es sich um mindestens einen, bevorzugt genau einen ungesättigten Alkohol (B), der mindestens eine, bevorzugt genau eine C=C-Doppelbindung und mindestens eine, bevorzugt genau eine Hydroxygruppe trägt.

Bei den C=C-Doppelbindungen handelt es sich erfindungsgemäß um nicht-aktivierte Doppelbindungen, soll heißen solche C=C-Doppelbindungen oder konjugierte Doppelbindungssystemen, die mit keinen anderen Gruppen als Wasserstoff und sp³-hybridisierten Kohlenstoffatomen direkt verbunden sind, d.h. in direkter Nachbarschaft. Bei derartigen sp³-hybridisierten Kohlenstoffatomen kann es sich beispielsweise um Alkylgruppen, unsubstituierte Methylengruppen, einfach substituierte (1,1-Alkylengruppen) oder zweifach substituierte Alkylengruppen (n,n-Alkylengruppen) handeln.

Im Fall von konjugierten Doppelbindungssystemen ist die C=C-Doppelbindung mit einer oder mehreren weiteren C=C-Doppelbindungen und/oder aromatischen System konjugiert, wobei es sich bevorzugt um ein bis drei, besonders bevorzugt ein bis zwei und ganz besonders bevorzugt genau eine weitere C=C-Doppelbindungen bzw. bevorzugt um genau ein carbocyclisches aromatisches Ringsystem handelt. Erfindungsgemäß wichtig ist, daß in diesem Fall das konjugierte Doppelbindungssystem mit keinen anderen Gruppen als Wasserstoff und sp³-hybridisierten Kohlenstoffatomen direkt verbunden ist. Bei dem aromatischen Ringsystem handelt es sich um ein carbocyclisches Ringsystem, heteroaromatische Systeme sind erfindungsgemäß ausgeschlossen.

Bevorzugt handelt es sich bei den C=C-Doppelbindungen um isolierte Doppelbindung, Alkohole (B) mit konjugierten Doppelbindungssystemen sind weniger bevorzugt.

Ausgeschlossen sind dagegen solche C=C-Doppelbindungen, die elektronisch aktiviert sind, also beispielsweise Vinylethergruppen, Acrylat- oder Methacrylatgruppen.

Zwischen den C=C-Doppelbindungen und Hydroxygruppen befindet sich mindestens ein sp³-hybridisiertes Kohlenstoffatom, bevorzugt ein bis zehn, besonders bevorzugt ein bis fünf, ganz besonders bevorzugt ein bis drei, insbesondere ein bis zwei und speziell eines.

Beispiele für derartige Verbindungen (B) sind Allylalkohol (2-Propen-1-ol), Methallylalkohol (2-Methyl-2-propen-1-ol), Homoallylalkohol (3-Buten-1-ol), 1-Buten-3-ol, 3-Methyl-2-buten-1-ol, 2-Methyl-3-buten-2-ol, 1-Octen-3-ol, 2-Hexen-1-ol, 1-Penten-3-ol sowie ferner Phytol, Farnesol und Linalool.

Beispiele für Verbindungen (B) mit mehreren C=C-Doppelbindungen sind 1,4-Pentadien-3-ol, 1,4-Hexadien-3-ol und 5-Methyl-1,4-hexadien-3-ol. Verbindungen mit mehreren C=C-Doppelbindungen sind jedoch weniger bevorzugt.

Ein Beispiel für Verbindungen (B) mit C=C-Doppelbindungen, die zu einem carbocyclischen aromatischen Ringsystem konjugiert sind, ist Zimtalkohol. Verbindungen mit zu Aromaten konjugierten C=C-Doppelbindungen sind jedoch weniger bevorzugt.

Bevorzugt sind Allylalkohol, Methallylalkohol und Homoallylalkohol, besonders bevorzugt ist Allylalkohol.

Bei der Verbindung (C) handelt es sich um solche der Formel (V): 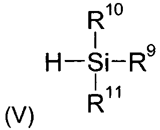 wobei R⁹-R¹¹ die oben stehende Bedeutung haben. Darin bedeuten R⁹ bis R¹¹ unabhängig voneinander bevorzugt
- einen C₁-C₄-Alkylrest oder
- einen Rest -O-R¹²,
   worin
   R¹² ein C₁-C₄-Alkyl- oder Phenylrest.

Besonders bevorzugt sind R⁹ bis R¹¹ ausgewählt aus der Gruppe bestehend aus Methyl, Ethyl, iso-Propyl, n-Butyl, tert-Butyl, Methoxy, Ethoxy, tert-Butyloxy und Phenoxy, ganz besonders bevorzugt aus der Gruppe bestehend aus Methyl, Ethyl, Methoxy und Ethoxy.

Bei dem eingesetzten Silanen (C) handelt es sich bevorzugt um Tris(alkyloxy)silane oder Alkyl bis(alkyloxy)silane, besonders bevorzugt um Tris(C₁-C₄-alkyloxy)silane oder C₁-C₄-Alkyl bis(C₁-C₄-alkyloxy)silane.

Bei dem eingesetzten Silanen (C) handelt es sich ganz besonders bevorzugt um Triethylsilan, Triethylsilan, Tri-iso-propylsilan, Dimethylphenylsilan, Diethoxymethylsilan, Dimethoxymethylsilan, Ethoxydimethylsilan, Phenoxydimethylsilan, Triethoxysilan, Trimethoxysilan, Bistrimethylsiloxymethylsilan oder Gemische davon.

Es steilt eine bevorzugte Ausführungsform der vorliegenden Erfindung dar, als Gemi-sche von Silanen (C) ein Gemisch von Tris(alkyloxy)silanen mit Alkyl bis (alkyloxy)silanen in einem Verhältnis von 5:1 bis 1:5, bevorzugt von 4:2 bis 2:4 und besonders bevorzugt von etwa 3:3 einzusetzen.

Die Stöchiometrie von ungesättigtem Alkohol (B) zu den Ethergruppen im Aminoplastharz, die zu ersetzende sind, beträgt in der Regel von 0,2:1 bis 1:0,2.

Die Stöchiometrie von Silan (C) nach Formel (V) zu Doppelbindungen im so ver- oder umgeetherten Aminoplastharz erhalten durch Umsetzung mit einem ungesättigten Alkohol beträgt in der Regel von 0,1:1 bis 1,0:1, bevorzugt von 0,5:1 bis 1,0:1, besonders bevorzugt von 0,6:1 bis 1,0:1 und ganz besonders bevorzugt von 0,8:1 bis 1,0:1.

Denkbar ist auch der Einsatz von Verbindungen (C), die mehr als eine Si-H-Bindung tragen, beispielsweise mindestens zwei, bevorzugt zwei bis vier, besonders bevorzugt zwei oder drei und ganz besonders bevorzugt zwei.

Beispiel dafür sind siloxanverbrückte Verbindungen (C1) der Formel 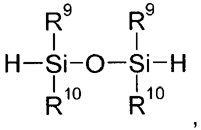 worin R⁹ und R¹⁰ die obigen Bedeutungen haben können.

Beispiele dafür sind Tetramethylsiloxan, Tetraethylsiloxan und Tetraphenylsiloxan.

Die Umsetzung zu den erfindungsgemäßen silylierten Aminoplastharzen kann in der ersten Stufe bevorzugt zwischen 40 und 120 °C erfolgen, besonders bevorzugt zwischen 60 und 110 °C und ganz besonders bevorzugt zwischen 80 und 100 °C und in der zweiten Stufe bevorzugt zwischen 40 und 80°C, besonders bevorzugt zwischen 50 und 70 °C und ganz besonders bevorzugt bei 60°C.

Die Umsetzung kann in Substanz, bevorzugt aber in einem inerten, wasserfreien Lösungsmittel durchgeführt werden.

Die Umsetzung des eingesetzten Aminoplastharzes mit dem ungesättigten Alkohol kann katalysiert oder unkatalysiert, mit oder ohne Zugabe eines Schleppmittels, z.B. Toluol, erfolgen. Wenn ein Katalysator eingesetzt wird, so handelt es sich bei diesem bevorzugt um eine Säure. Beispiele für Säuren sind unten aufgeführt. Der ungesättigte Alkohol wird je nach gewünschtem Substitutionsgrad in einem Verhältnis von 1:1-20:1 (molar) bzgl. Aminoplastharz eingesetzt, bevorzugt in einem Verhältnis von 6:6 bis 15:6, besonders bevorzugt in einem Verhältnis von etwa 10:6. Der überschüssige Alkohol wird nach beendeter Reaktion unter vermindertem Druck bei maximal 50°C aus der Reaktionsmischung entfernt. Eine weitere Erwärmung des Reaktionsgemischs kann zur Polymerisation des Aminoplastharzes führen.

Es stellt eine bevorzugte Ausführungsform der vorliegenden Erfindung dar, das Verhältnis von Alkohol (B) zu Aminoplastharz (A) so zu wählen, daß das entstehende Harz einen Substitutionsgrad an Alkohol (B) je Melaminkern von bevorzugt mindestens drei, besonders bevorzugt vier bis sechs und ganz besonders bevorzugt fünf bis sechs aufweist. Falls erforderlich kann ein nur wenige Alkoholgruppen (B) tragendes Produkt durch Zugabe weiteren Alkohols (B) weiter umgesetzt werden.

Die Umsetzung des ungesättigten Alkohols (B) mit dem Aminoplastharz (A) kann erfolgen im Sinne einer Umetherung, bei der im Aminoplastharz enthaltene Alkylgruppen abgespalten und durch den ungesättigten Alkohol (B) ersetzt werden, oder im Sinne einer Veretherung, wobei im Aminoplastharz enthaltene freie Hydroxygruppen durch den ungesättigten Alkohol (B) substituiert werden. In der Regel laufen Ver- und Umetherung gleichzeitig ab, soweit freie Hydroxygruppen vorliegen.

Die Addition des Silans (C) an die Doppelbindung des ungesättigten Alkohols (B) erfolgt übergangsmetallkatalysiert. Als Übergangsmetalle kommen bevorzugt solche der achten Nebengruppe in Frage, besonders bevorzugt Platin, Rhodium, Palladium, Cobalt und Nickel metallisch oder in Form der Komplexe. Ein bevorzugter Katalysator ist z.B. der sogenannte Karstedt Katalysator (Platin-divinyltetramethyldisiloxan) oder Hexachloroplatinsäurehydrat, beispielsweise auch in Form von Speier-Katalysator, also in Form der Lösung in iso-Propanol, sowie Platin auf Aktivkohle.

In der Regel wird die Reaktion in der ersten Stufe so durchgeführt, daß der eingesetzte ungesättigte Alkohol ggf. zusammen mit dem Katalysator vorgelegt, auf die gewünschte Temperatur gebracht und das Aminoplastharz ggf. gelöst in einem geeigneten Lösungsmittel langsam dazugegeben wird.

Das freigesetzte Methanol wird kontinuierlich in einem Wasserabscheider gesammelt und die Reaktion abgebrochen, nachdem die theoretische Menge Methanol abgeschieden wurde. Wenn Wasser in der Reaktionsmischung enthalten ist, wird vorteilhaft eine kurze Vigreux Kolonne zur effektiven Trennung des Azeotrops aus ungesättigtem Alkohol und Wasser vom gebildeten Methanol eingesetzt. Bevorzugt wird die Reaktion allerdings unter Ausschluss von Wasser durchgeführt. Zu diesem Zweck wird der eingesetzte ungesättigte Alkohol vor Verwendung über Kaliumcarbonat oder ein anderes geeignetes Trockenmittel destilliert.

Das erhaltene Reaktionsprodukt kann durch Säulenchromatographie an Kieselgel (Silicagel Si 60, 40-63 µm, Merck) mit einem Laufmittelgemisch aus Ethylacetat und Pentan im Verhältnis 1:2 gereinigt werden. Das Rohprodukt enthält allerdings in der Regel nur geringe Verunreinigungen und kann ohne weitere Aufreinigung in die folgende Synthese eingesetzt werden.

In der Regel wird die zweite Reaktionsstufe so durchgeführt, dass das Vorprodukt aus der ersten Reaktionsstufe bevorzugt unter inerter Atmosphäre zusammen mit dem entsprechenden Silan in einem wasserfreien, inerten Lösemittel vorgelegt und unter starkem Rühren mit einer Lösung des Übergangsmetallkatalysators in demselben Lösemittel versetzt wird. Die Reaktionsmischung wird bei oben genannter Temperatur 30 Minuten bis 3 Stunden, bevorzugt 1 bis 2 Stunden gerührt und ggf. anschließend unter vermindertem Druck von Lösemittel befreit. Eine Aufarbeitung des Produkts ist nicht erforderlich.

Geeignete saure Katalysatoren sind Schwefelsäure, Salpetersäure, Phosphorsäure, Salzsäure, para-Toluolsulfonsäure, Benzolsulfonsäure, Dodecylbenzolsulfonsäure, Methansulfonsäure oder Gemische davon, denkbar sind auch saure Ionenaustauscher. Bevorzugt sind Sulfonsäuren, besonders bevorzugt ist para-Toluolsulfonsäure.

Der saure Katalysator wird in der Regel in Mengen von 0,1 bis 1 Gew%, bevorzugt 0,1 bis 0,5 Gew % zugegeben. Es kann sinnvoll sein, den Katalysator in mehreren Portionen einzutragen.

Das erhaltene silylierte Aminoplastharz weist eine Viskosität bei 23 °C gemäß ISO 3219/B von bevorzugt zwischen 100 und 20000 mPas, besonders bevorzugt zwischen 500 und 10000 mPas auf.

Die Scherrate sollte dabei bevorzugt 250 s⁻¹ betragen.

Das zahlenmittlere Molgewicht Mₙ der erhaltenen silylierten Aminoplastharze, insbesondere Melamin-Formaldehyd-Harze beträgt in der Regel weniger als 3500 g/mol, bevorzugt von weniger als 3000 g/mol und besonders bevorzugt von weniger als 2500 auf (bestimmt durch Gelpermeationschromatographie mit Tetrahydrofuran und Polystyrol als Standard, DIN 55672, Teil 1).

In einer bevorzugten Ausführungsform beträgt die Säurezahl der erhaltenen Aminoplastharze, besonders der Melamin-Formaldehyd-Harze weniger als 3, besonders bevorzugt weniger als 2 mg KOH/g, bestimmt gemäß ISO 3682.

Der Gehalt an freiem Formaldehyd in den erfindungsgemäßen silylierten Aminoplastharzen beträgt in der Regel nicht mehr als 0,2 Gew%, bevorzugt nicht mehr als 0,15 Gew% und besonders bevorzugt nicht mehr als 0,1 Gew%.

Der Gehalt an freiem Formaldehyd wird bestimmt gemäß EN ISO 9020.

Das erfindungsgemäß erhaltene silylierte Aminoplastharze, besonders Melamin-Formaldehyd-Harz kann anschließend mit gängigen Lösungsmitteln vermischt werden.

Beispiele für derartige Lösungsmittel sind aromatische und/oder (cyclo)aliphatische Kohlenwasserstoffe und deren Gemische, halogenierte Kohlenwasserstoffe, Ester, Ether und Alkohole.

Bevorzugt sind aromatische Kohlenwasserstoffe, (cyclo)aliphatische Kohlenwasserstoffe, Alkansäurealkylester, alkoxylierte Alkansäurealkylester und deren Gemische.

Besonders bevorzugt sind ein- oder mehrfach alkylierte Benzole und Naphthaline, Alkansäurealkylester und alkoxylierte Alkansäurealkylester sowie deren Gemische. Als aromatische Kohlenwasserstoffgemische sind solche bevorzugt, die überwiegend aromatische C₇- bis C₁₄-Kohlenwasserstoffe umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154 - 178 °C), 150 (Siedebereich etwa 182 - 207 °C) und 200 (CAS-Nr. 64742-94-5), sowie die Shellsol®-Marken der Firma Shell. Kohlenwasserstoffgemische aus Paraffinen, Cycloparaffinen und Aromaten sind auch unter den Bezeichnungen Kristallöl (beispielsweise Kristallöl 30, Siedebereich etwa 158 -198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155 - 180 °C, schwer: Siedebereich etwa 225 - 300 °C,) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

Die Dichte bei 20°C gemäß DIN 51757 der Kohlenwasserstoffe kann weniger als 1 g/cm³ aufweisen, bevorzugt weniger als 0,95 und besonders bevorzugt weniger als 0,9 g/cm³.

Der Gehalt an aliphatischen Kohlenwasserstoffen beträgt in der Regel weniger als 5, bevorzugt weniger als 2,5 und besonders bevorzugt weniger als 1 Gew%.

Halogenierte Kohlenwasserstoffe sind beispielsweise Chlorbenzol und Dichlorbenzol oder dessen Isomerengemische.

Ester sind beispielsweise n-Butylacetat, Ethylacetat, 1-Methoxypropylacetat-2 und 2-Methoxyethylacetat, sowie die Mono- und Diacetylester von Ethylenglykol, Diethylenglykol, Triethylenglykol, Propylenglykol, Dipropylenglykol oder Tripropylenglykol, wie beispielsweise Butylglykolacetat. Weitere Beispiele sind auch Carbonate, wie bevorzugt 1,2-Ethylencarbonat, 1,2-Propylencarbonat oder 1,3-Propylencarbonat.

Ether sind beispielsweise Tetrahydrofuran (THF), Dioxan sowie die Dimethyl-, -ethyloder -n-butylether von Ethylenglykol, Diethylenglykol, Triethylenglykol, Propylenglykol, Dipropylenglykol oder Tripropylenglykol.

(Cyclo)aliphatische Kohlenwasserstoffe sind beispielsweise Dekalin, alkyliertes Dekalin und Isomerengemische von geradlinigen oder verzweigten Alkanen und/oder Cycloalkanen.

Weiterhin bevorzugt sind n-Butylacetat, Ethylacetat, 1-Methoxypropylacetat-2, 2-Methoxyethylacetat, sowie deren Gemische, insbesondere mit den oben aufgeführten aromatischen Kohlenwasserstoffgemischen.

Derartige Gemische können im Volumenverhältnis 10:1 bis 1:10 erstellt werden, bevorzugt im Volumenverhältnis 5:1 bis 1:5 und besonders bevorzugt im Volumenverhältnis 1:1,

Bevorzugte Beispiele sind Butylacetat/Xylol, Methoxypropylacetat/Xylol 1:1, Butylacetat/Solventnaphtha 100 1:1, Butylacetat/Solvesso® 100 1:2 und Kristallöl 30/Shellsol® A 3:1.

Alkohole sind beispielsweise Methanol, Ethanol, n-Propanol, iso-Propanol, n-Butanol, sek-Butanol, iso-Butanol, Pentanol-Isomerengemische, Hexanol-Isomerengemische, 2-Ethylhexanol oder Oktanol.

Es stellt einen Vorteil der erfindungsgemäßen silylierten Aminoplastharze dar, daß sie in Lacken den unsilylierten Aminoplastharzen vergleichbare oder sogar verbesserte Eigenschaften bzgl. Glanz und Härte zeigen. Zusätzlich weisen sie einen weiteren Vernetzungsmechanismus über die enthaltenen Silylgruppen auf.

Die Härtung erfolgt in der Regel so, daß nach Aufbringen der Beschichtung der Substrate mit den die erfindungsgemäßen Aminoplastharze enthaltenden Beschichtungsmassen oder Lackformulierungen, gegebenenfalls mit weiteren lacktypischen Additiven und thermisch härtbaren Harzen versetzt, gegebenenfalls bei einer Temperatur unter 80°C, bevorzugt Raumtemperatur bis 60 °C und besonders bevorzugt Raumtemperatur bis 40 °C über einen Zeitraum bis zu 72 Stunden, bevorzugt bis zu 48 Stunden, besonders bevorzugt bis zu 24 Stunden, ganz besonders bevorzugt bis zu 12 und insbesondere bis zu 6 Stunden trocknet, und unter sauerstoffhaltiger Atmosphäre, bevorzugt Luft, oder unter Inertgas bei Temperaturen zwischen 80 und 270, bevorzugt zwischen 100 und 240 und besonders bevorzugt zwischen 120 und 180 °C thermisch behandelt (härtet). Die Lackhärtung erfolgt in Abhängigkeit der Menge an aufgetragenem Beschichtungsstoff und der eingetragenen Vernetzungsenergie über energiereiche Strahlung, Wärmeübergang von beheizten Oberflächen oder über Konvektion von gasförmigen Medien über einen Zeitraum von Sekunden, z.B. bei Bandlackierung in Kombination mit NIR-Trocknung, bis zu 5 Stunden, z.B. Dickschichtsysteme auf temperaturempfindlichen Materialien, meist nicht weniger als 10 min, bevorzugt nicht weniger als 15, besonders bevorzugt nicht weniger als 30 und ganz besonders bevorzugt nicht weniger als 45 min. In der Trocknung wird im Wesentlichen vorhandenes Lösungsmittel entfernt, darüber hinaus kann auch bereits eine Reaktion mit dem Bindemittel stattfinden, wohingegen die Härtung im wesentlichen die Reaktion mit dem Bindemittel umfasst.

Die Härtung kann auch zusätzlich oder anstelle der thermischen Härtung durch IR- und NIR-Strahlung erfolgen, wobei als NIR-Strahlung hier elektromagnetische Strahlung im Wellenlängenbereich von 760 nm bis 2,5 µm, bevorzugt von 900 bis 1500 nm bezeichnet ist.

Die Härtung erfolgt in einem Zeitraum von 1 Sekunde bis 60 min, bevorzugt von 1 min bis 45 min.

Ein weiterer Gegenstand der vorliegenden Erfindung sind Beschichtungsmassen, die mindestens ein erfindungsgemäßes silyliertes Aminoplastharz enthalten.

Als Bindemittel enthalten derartige Beschichtungsmassen mindestens ein Bindemittel, das gegenüber Aminoplastharzen reaktive Gruppen enthält. Diese sind in der Regel ausgewählt aus der Gruppe bestehend aus epoxygruppenhaltigen Bindemitteln, hydroxygruppenhaltigen Bindemitteln, carboxygruppenhaltigen Bindemitteln und aminogruppenhaltigen Bindemitteln.

Bevorzugt handelt es sich bei dem hydroxygruppenhaltigen Bindemittel um Polyetherole, Polyesterole, Polyacrylatpolyole, Polycarbonatpolyole, Alkydharze oder Epoxyharze. Besonders bevorzugt sind Polyesterole und Polyacrylatpolyole, ganz besonders bevorzugt sind Polyacrylatpolyole.

Die Bindemittel weisen pro Molekül statistisch im Mittel mindestens zwei, bevorzugt zwei bis zehn, besonders bevorzugt drei bis zehn und ganz besonders bevorzugt drei bis acht Hydroxygruppen auf.

Die OH-Zahl, gemessen gemäß DIN 53240-2, beträgt in der Regel von 10 bis 200 mg KOH/g, bevorzugt von 30 bis 140.

Zusätzlich können die Bindemittel eine Säurezahl gemäß DIN EN ISO 3682 von 0 bis 200 mg KOH/g, bevorzugt 0 - 100 und besonders bevorzugt 0 bis 10 mg KOH/g aufweisen.

Bei den Polyacrylatpolyole handelt es sich beispielsweise um solche, Copolymere von (Meth)Acrylsäureestern mit mindestens einer Verbindung mit mindestens einer, bevorzugt genau einer Hydroxygruppe und mindestens einer, bevorzugt genau einer (Meth)Acrylatgruppe.

Letztere können beispielsweise Monoester von α,β-ungesättigten Carbonsäuren, wie Acrylsäure, Methacrylsäure (in dieser Schrift kurz als "(Meth)acrylsäure" bezeichnet), mit Di- oder Polyolen, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,4-Butandiol, 1,5-Pentandiol, Neopentylglykol, Hydroxypivalinsäureneopentylglykolester, 2-Ethyl-1,3-Propandiol, 2-Methyl-1,3-Propandiol, 2-Butyl-2-ethyl-1,3-Propandiol, 1,6-Hexandiol, 2-Methyl-1,5-pentandiol, 2-Ethyl-1 ,4-butandiol, 2-Ethyl-1,3-Hexandiol, 2,4-Diethyloktan-1,3-diol, 2,2-Bis(4-hydroxycyclohexyl)propan, 1,1-, 1,2-, 1,3- und 1,4-Bis(hydroxymethyl)-cyclohexan, 1,2-, 1,3- oder 1,4-Cyclohexandiol, Glycerin, Trimethylolethan, Trimethylolpropan, Trimethylolbutan, Pentaerythrit, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit, Isomalt, Poly-THF mit einem Molgewicht zwischen 162 und 2000, Poly-1,3-propandiol oder Polypropylenglykol mit einem Molgewicht zwischen 134 und 2000 oder Polyethylenglykol mit einem Molgewicht zwischen 238 und 2000 sein.

Bevorzugt sind 2-Hydroxyethylacrylat, 2-Hydroxyethylmethacrylat, 2- oder 3-Hydroxypropylacrylat, 1,4-Butandiolmonoacrylat oder 3-(Acryloyloxy)-2-hydroxypropylacrylat und besonders bevorzugt 2-Hydroxyethylacrylat und/oder 2-Hydroxyethylmethacrylat.

Die hydroxygruppentragenden Monomere werden in die Copolymerisation im Gemisch mit anderen polymerisierbaren, bevorzugt radikalisch polymerisierbaren Monomeren, bevorzugt um solche, welche zu mehr als 50 Gew.-% aus C₁-C₂₀-Alkyl(meth)acrylat, Vinylaromaten mit bis zu 20 C-Atomen, Vinylestern von bis zu 20 C-Atomen enthaltenden Carbonsäuren, Vinylhalogeniden, nicht aromatischen Kohlenwasserstoffen mit 4 bis 8 C-Atomen und 1 oder 2 Doppelbindungen, ungesättigten Nitrilen und deren Mischungen bestehen. Besonders bevorzugt sind die Polymeren, die zu mehr als 60 Gew.-% aus C₁-C₁₀-Alkyl(meth)acrylaten, Styrol oder deren Mischungen bestehen.

Darüber können die Polymeren hydroxyfunktionelle Monomere entsprechend dem obigen Hydroxygruppengehalt und gegebenenfalls weitere Monomere enthalten, z.B. ethylenisch ungesättigte Säuren, insbesondere Carbonsäuren, Säureanhydride oder Säureamide.

Weitere Bindemittel sind Polyesterole, wie sie durch Kondensation von Polycarbonsäuren, insbesondere Dicarbonsäuren mit Polyolen, insbesondere Diolen erhältlich sind.

Polyesterpolyole, sind z.B. aus Ullmanns Encyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt:
Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Butylester, der genannten Säuren eingesetzt werden. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1,2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Poly-THF mit einer Molmasse zwischen 162 und 2000, Poly-1,3-propandiol mit einer Molmasse zwischen 134 und 1178, Poly-1,2-propandiol mit einer Molmasse zwischen 134 und 898, Polyethylenglykol mit einer Molmasse zwischen 106 und 458, Neopentylglykol, Hydroxypivalinsäureneopentylglykolester, 2-Ethyl-1,3-Propandiol, 2-Methyl-1,3-Propandiol, 2,2-Bis(4-hydroxycyclohexyl)-propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt, die gegebenenfalls wie oben beschrieben alkoxyliert sein können.

Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglycol, Butan-1,4-diol, Hexan-1,6-diol, Octan-1,8-diol und Dodecan-1,12-diol. Weiterhin bevorzugt ist Neopentylglykol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, gamma-Butyrolacton und/oder Methyl-ε-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Weiterhin sind als Polymere auch Polyetherole geeignet, die durch Addition von Ethylenoxid, Propylenoxid oder Butylenoxid an H-aktive Komponenten hergestellt werden. Ebenso sind Polykondensate aus Butandiol geeignet.

Bei den Polymeren kann es sich natürlich auch um Verbindungen mit primären der sekundären Aminogruppen handeln.

Ferner kommen auch Polycarbonatpolyole, wie sie z.B. durch Umsetzung von Phosgen mit einem Überschuß von den als Aufbaukomponenten für die Polyesterpolyole genannten niedermolekularen Alkohole erhalten werden können, in Betracht.

Bei Alkydharzen handelt es sich um Polykondensationsharze aus Polyolen, mehrwertigen Carbonsäuren und fetten Ölen oder freien natürlichen und/oder synthetischen Fettsäuren; mindestens ein Polyol muß tri- oder höherfunktionell sein.

Als Polyole und mehrwertige Carbonsäuren können beispielsweise die Komponenten eingesetzt werden, die oben bei den Polyesterolen genannt sind.

Bevorzugte mehrwertige Alkohole sind Glycerin, Pentaerythrit, Trimethylolethan, Trimethylolpropan, verschiedene Diole wie Ethan-/Propandiol, Diethylenglykol, Neopentylglykol.

Bevorzugte mehrwertige Carbonsäuren sind Phthalsäure(anhydrid) (PSA), Isophthalsäure, Terephthalsäure, Trimellitsäureanhydrid, Adipinsäure, Azelainsäure, Sebacinsäure.

Als Ölkomponente bzw. Fettsäure kommen beispielsweise trocknende Öle, wie Leinöl, Oiticicaöl oder Holzöl, halbtrocknende Öle, wie Sojaöl, Sonnenblumenöl, Safloröl, Ricinenöl oder Tallöl, nicht-trocknende Öle, wie Ricinusöl, Kokosöl oder Erdnußöl, oder freie Fettsäuren obiger Öle oder synthetische Monocarbonsäuren in Betracht.

Die Molmasse von typischer Alkydharze liegt zwischen 1500 und 20000, bevorzugt zwischen 3500 und 6000. Die Säurezahl beträgt bevorzugt 2 bis 30 mg KOH/g, bei wasserverdünnbaren Harzen auch 35-65 mg KOH/g. Die OH-Zahl beträgt in der Regel bis zu 300, bevorzugt bis zu 100 mg KOH/g.

Derartige Polyacrylatpolyole, Polyesterole und/oder Polyetherole weisen bevorzugt ein Molekulargewicht Mₙ von mindestens 1000, besonders bevorzugt mindestens 2000 und ganz besonders bevorzugt mindestens 5000 g/mol auf. Das Molekulargewicht Mₙ kann beispielsweise bis 200.000, bevorzugt bis zu 100.000, besonders bevorzugt bis zu 80.000 und ganz besonders bevorzugt bis zu 50.000 g/mol betragen.

Den Beschichtungsmassen können weiterhin Covernetzer zugegeben werden, beispielsweise Trisalkylcarbamoyltriazine (TACT), bevorzugt Trismethylcarbamoyltriazinen, Tris-n-butylcarbamoyltriazine und gemischte methylierte/n-butylierte Trisalkylcarbamoyltriazine.

Des weiteren können die erfindungsgemäßen Aminoplastharze, insbesondere die Melamin-Formaldehyd-Harze auch zusammen mit nicht-vernetzbaren Bindemitteln, d.h. solchen ohne gegen Melamin-Formaldehyd-Harze reaktive Gruppen, eingesetzt werden. In diesem Fall vernetzen die erfindungsgemäßen Aminoplastharze durch Kondensation ihrer Silangruppen untereinander.

Die Vernetzung wird durch Zugabe von Säuren beschleunigt.

Unter schwachen Säuren werden dabei im Rahmen dieser Schrift ein- oder mehrwertige, organische oder anorganische, bevorzugt organische Säuren mit einem pKs-Wert zwischen 1,6 und 5,2, bevorzugt zwischen 1,6 und 3,8 verstanden.

Beispiele dafür sind Kohlensäure, Phosphorsäure, Ameisensäure, Essigsäure und Maleinsäure, Glyoxylsäure, Bromessigsäure, Chloressisgsäure, Thioglykolsäure, Glycin, Cyanessigsäure, Acrylsäure, Malonsäure, Hydroxypropandisäure, Propionsäure, Miöchsäure, 3-Hydroxypropionsäure, Glycerylsäure, Alanin, Sarcosin, Fumarsäure, Acetoessigsäure, Bernsteinsäure, iso-Buttersäure, Pentansäure, Ascorbinsäure, Zitronensäure, Nitrilotriessigsäure, Cyclopentancarbonsäure, 3-Methylglutarsäure, Adipinsäure, Hexansäure, Benzoesäure, Cyclohexancarbonsäure, Heptandionsäure, Heptansäure, Phthalsäure, Isophthalsäure, Terephthalsäure, Tolylsäure, Phenylessigsäure, Phenoxyessigsäure, Mandelsäure oder Sebacinsäure.

Bevorzugt sind organische Säuren, bevorzugt ein- oder mehrwertige Carbonsäuren. Besonders bevorzugt sind Ameinsensäure, Essigsäure, Maleinsäure oder Fumarsäure.

Unter starken Säuren werden dabei im Rahmen dieser Schrift ein- oder mehrwertige, organische oder anorganische, bevorzugt organische Säuren mit einem pKs-Wert von weniger als 1,6 und besonders bevorzugt weniger als 1 verstanden.

Beispiele dafür sind Schwefelsäure, Pyrophosphorsäure, Schweflige Säure und Tetrafluoroborsäure, Trichloressigsäure, Dichloressigsäure, Oxalsäure, Nitroessigsäure.

Bevorzugt sind organische Säuren, bevorzugt organische Sulfonsäuren. Besonders bevorzugt sind Methansulfonsäure, para-Toluolsulfonsäure, Benzolsulfonsäure, Dodecylbenzolsulfonsäure, Cyclododekansulfonsäure und Camphersulfonsäure.

Die Säuren werden im allgemeinen in Mengen bis zu 10 Gew%, bevorzugt 0,1 bis 8, besonders bevorzugt 0,3 bis 6, ganz besonders bevorzugt 0,5 bis 5 und insbesondere von 1 bis 3 Gew% bezogen auf das eingesetzte Aminoplastharz eingesetzt.

Weiter können die Säuren als freie Säuren oder blockiert eingesetzt werden.

Als weitere lacktypische Additive können beispielsweise Antioxidantien, Stabilisatoren, Aktivatoren (Beschleuniger), Füllmittel, Pigmente, Farbstoffe, antistatische Agentien, Flammschutzmittel, Verdicker, thixotrope Agentien, oberflächenaktive Agentien, Viskositätsmodifikatoren, Plastifizierer oder Chelatbildner verwendet werden.

Als Verdicker kommen neben radikalisch (co)polymerisierten (Co)Polymerisaten, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Geeignete Füllstoffe umfassen Silikate, z. B. durch Hydrolyse von Siliciumtetrachlorid erhältliche Silikate wie Aerosil^{®} der Fa. Degussa, Kieselerde, Talkum, Aluminiumsilikate, Magnesiumsilikate, Calciumcarbonate etc.

Geeignete Stabilisatoren umfassen typische UV-Absorber wie Oxanilide, Triazine und Benzotriazol (letztere erhältlich als Tinuvin^{®} -Marken der Ciba-Spezialitätenchemie) und Benzophenone. Diese können allein oder zusammen mit geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Stabilisatoren werden üblicherweise in Mengen von 0,1 bis 5,0 Gew.-%, bezogen auf die in der Zubereitung enthaltenen festen Komponenten, eingesetzt.

Pigmente können ebenfalls enthalten sein. Pigmente sind gemäß CD Römpp Chemie Lexikon - Version 1.0, Stuttgart/New York: Georg Thieme Verlag 1995 unter Verweis auf DIN 55943 partikelförmige "im Anwendungsmedium praktisch unlösliche, anorganische oder organische, bunte oder unbunte Farbmittel".

Praktisch unlöslich bedeutet dabei eine Löslichkeit bei 25 °C unter 1 g / 1000 g Anwendungsmedium, bevorzugt unter 0,5, besonders bevorzugt unter 0,25, ganz besonders bevorzugt unter 0,1 und insbesondere unter 0,05 g / 1000 g Anwendungsmedium.

Beispiele für Pigmente umfassen beliebige Systeme von Absorptions- und/oder Effektpigmenten, bevorzugt Absorptionspigmente. Anzahl und Auswahl der Pigmentkomponenten sind dabei keinerlei Beschränkungen unterworfen. Sie können den jeweiligen Erfordernissen, beispielsweise dem gewünschten Farbeindruck, beliebig angepasst werden.

Unter Effektpigmenten sind alle Pigmente zu verstehen, die einen plättchenförmigen Aufbau zeigen und einer Oberflächenbeschichtung spezielle dekorative Farbeffekte verleihen. Bei den Effektpigmenten handelt es sich beispielsweise um alle in der Fahrzeug- und Industrielackierung üblicherweise einsetzbaren effektgebenden Pigmente. Beispiele für derartige Effektpigmente sind reine Metallpigmente; wie z.B. Aluminium-, Eisen- oder Kupferpigmente; Interferenzpigmente, wie z.B. titandioxidbeschichteter Glimmer, eisenoxidbeschichteter Glimmer, mischoxidbeschichteter Glimmer (z.B. mit Titandioxid und Fe₂O₃ oder Titandioxid und Cr₂O₃), metalloxidbeschichtetes Aluminium, oder Flüssigkristallpigmente.

Bei den farbgebenden Absorptionspigmenten handelt es sich beispielsweise um übliche in der Lackindustrie einsetzbare organische oder anorganische Absorptionspigmente. Beispiele für organische Absorptionspigmente sind Azopigmente, Phthalocyanin-, Chinacridon- und Pyrrolopyrrolpigmente. Beispiele für anorganische Absorptionspigmente sind Eisenoxidpigmente, Titandioxid und Ruß.

Die erfindungsgemäßen Beschichtungsmassen sind also folgendermaßen zusammengesetzt:
- mindestens ein erfindungsgemäßes silyliertes Aminoplastharz, bevorzugt ein Melamin-Formaldehyd-Harz,
- gegebenenfalls mindestens entweder eine starke oder eine schwache Säure,
- gegebenenfalls mindestens ein Bindemittel,
- gegebenenfalls mindestens ein lacktypisches Additiv,
- gegebenenfalls mindestens ein Lösungsmittel sowie
- gegebenenfalls mindestens ein Pigment.

Die Beschichtung der Substrate mit den erfindungsgemäßen Beschichtungsmassen erfolgt nach üblichen, dem Fachmann bekannten Verfahren, wobei man wenigstens eine erfindungsgemäße Beschichtungsmasse oder Lackformulierung auf das zu beschichtende Substrat in der gewünschten Stärke aufbringt und die flüchtigen Bestandteile der Beschichtungsmasse, gegebenenfalls unter Erhitzen, entfernt (Trocknen). Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen oder Gießen erfolgen. Die Beschichtungsstärke liegt in der Regel in einem Bereich von etwa 3 bis 1000 g/m² und vorzugsweise 10 bis 200 g/m².

Anschließend kann wie oben beschrieben gehärtet werden.

Geeignete Substrate für die erfindungsgemäßen Beschichtungsmassen sind beispielsweise thermoplastische Polymere, insbesondere Polymethylmethacrylate, Polybutylmethacrylate, Polyethylenterephthalate, Polybutylenterephthalate, Polyvinylidenfluoride, Polyvinylchloride, Polyester, Polyolefine, Acrylnitrilethylenpropylendienstryolcopolymere (A-EPDM), Polyetherimide, Polyetherketone, Polyphenylensulfide, Polyphenylenether oder deren Mischungen.

Weiterhin genannt seien Polyethylen, Polypropylen, Polystyrol, Polybutadien, Polyester, Polyamide, Polyether, Polycarbonat, Polyvinylacetal, Polyacrylnitril, Polyacetal, Polyvinylalkohol, Polyvinylacetat, Phenolharze, Harnstoffharze, Melaminharze, Alkydharze, Epoxidharze oder Polyurethane, deren Block- oder Pfropfcopolymere und Blends davon.

Bevorzugt genannt seien ABS, AES, AMMA, ASA, EP, EPS, EVA, EVAL, HDPE, LDPE, MABS, MBS, MF, PA, PA6, PA66, PAN, PB, PBT, PBTP, PC, PE, PEC, PEEK, PEI, PEK, PEP, PES, PET, PETP, PF, PI, PIB, PMMA, POM, PP, PPS, PS, PSU, PUR, PVAC, PVAL, PVC, PVDC, PVP, SAN, SB, SMS, UF, UP-Kunststoffe (Kurzzeichen gemäß DIN 7728) und aliphatische Polyketone.

Besonders bevorzugte Substrate sind Polyolefine, wie z.B. PP(Polypropylen), das wahlweise isotaktisch, syndiotaktisch oder ataktisch und wahlweise nicht-orientiert oder durch uni- oder bisaxiales Recken orientiert sein kann, SAN (Styrol-Acrylnitril-Copolymere), PC (Polycarbonate), PVC (Polyvinylchloride), PMMA (Polymethylmethacrylate), PBT (Poly(butylenterephthalat)e), PA (Polyamide), ASA (Acrylnitril-Styrol-Acrylester-Copolymere) und ABS (Acrylnitril-Butadien-Styrol-Copolymere), sowie deren physikalische Mischungen (Blends). Besonders bevorzugt sind PP, SAN, ABS, ASA sowie Blends von ABS oder ASA mit PA oder PBT oder PC. Ganz besonders bevorzugt sind Polyolefine, PMMA und PVC.

Ganz besonders bevorzugt ist ASA, insbesondere gemäß DE 196 51 350 und der Blend ASA/PC. Bevorzugt ist ebenfalls Polymethylmethacrylat (PMMA) oder schlagzähmodifiziertes PMMA.

Ein weiterhin bevorzugtes Substrat zur Beschichtung mit den erfindungsgemäßen Beschichtungsmassen sind Metalle, die gegebenenfalls mit einem Primer vorbehandelt sein können.

Bei der Art des Metalls kann es sich im Prinzip um beliebige Metalle handeln. Insbesondere handelt es sich aber um solche Metalle oder Legierungen, welche üblicherweise als metallische Konstruktionswerkstoffe eingesetzt werden, und die vor Korrosion geschützt werden müssen.

Insbesondere handelt es sich um Oberflächen von Eisen, Stahl, Zn, Zn-Legierungen, Al oder AI-Legierungen. Es kann sich dabei um die Oberflächen von vollständig aus den besagten Metallen bzw. Legierungen bestehenden Körpern handeln. Die Körper können aber auch nur mit diesen Metallen beschichtet sein und selbst aus andersartigen Materialien bestehen, beispielsweise aus anderen Metallen, Legierungen, Polymeren oder Verbundwerkstoffen. Es kann sich um Oberflächen von Gußteilen, aus verzinktem Eisen oder Stahl handeln. In einer bevorzugten Ausführungsform der vorliegenden Erfindung handelt es sich um Stahloberflächen.

Zn- oder AI-Legierungen sind dem Fachmann bekannt. Je nach dem gewünschten Anwendungszweck wählt der Fachmann Art und Menge von Legierungsbestandteilen aus. Typische Bestandteile von Zink-Legierungen umfassen insbesondere Al, Pb, Si, Mg, Sn, Cu oder Cd. Typische Bestandteile von Aluminium-Legierungen umfassen insbesondere Mg, Mn, Si, Zn, Cr, Zr, Cu oder Ti. Es kann sich auch um Al/Zn-Legierungen handeln, bei denen Al- und Zn in annähernd gleicher Menge vorhanden sind. Mit derartigen Legierungen beschichteter Stahl ist kommerziell erhältlich. Der Stahl kann die üblichen, dem Fachmann bekannten Legierungskomponenten enthalten.

Denkbar ist auch die Anwendung der erfindungsgemäßen Beschichtungsmassen zur Behandlung von verzinntem Eisen/Stahl (Weißblech).

Die erfindungsgemäßen Beschichtungsmassen und Lackformulierungen eignen sich weiterhin zum Beschichten von Substraten wie Holz, Papier, Textil, Leder, Vlies, Kunststoffoberflächen, Glas, Keramik, mineralischen Baustoffen, wie Zement-Formsteine und Faserzementplatten, oder Metallen oder beschichteten Metallen, bevorzugt von Kunststoffen oder Metallen, insbesondere in Form von Folien, besonders bevorzugt Metallen.

Die erfindungsgemäßen Aminoplastharze, Beschichtungsmassen oder Lackformulierungen eignen sich als oder in Außenbeschichtungen, also solche Anwendungen, die dem Tageslicht ausgesetzt sind, bevorzugt von Gebäudeteilen, Innenbeschichtungen, Beschichtungen auf Fahrzeugen und Flugzeugen. Insbesondere werden die erfindungsgemäßen Aminoplastharze und Beschichtungsmassen als oder in Automobilklarund -decklacke(n) eingesetzt. Weitere bevorzugte Einsatzgebiete sind Can-Coating und Coil-Coating.

Besonders eignen sie sich als Grundierungen, Füller, pigmentierte Decklacke und Klarlacke im Bereich Industrie-, Holz-, Auto-, insbesondere OEM- Lackierung, oder Dekolackierung eingesetzt werden. Ganz besonders geeignet sind die Beschichtungsmittel für Anwendungen, in denen eine besonders hohe Applikationssicherheit, Außenwitterungsbeständigkeit, Optik, Lösemittel- und/oder Chemikalienfestigkeit gefordert werden.

Die folgenden Beispiele sollen die Eigenschaften der Erfindung erläutern, ohne sie aber einzuschränken.

### Beispiele

Als "Teile" seien in dieser Schrift, wenn nicht anders angegeben, "Gewichtsteile" verstanden.

### Beispiel 1

In einem Glasreaktor wurden 74,4 g Allylalkohol zusammen mit 300 mg para-Toluolsulfonsäure Monohydrat vorgelegt und auf 80-90°C erwärmt. Eine Lösung von 50 g Luwipal® 066 LF der BASF SE, Ludwigshafen in 37 ml Xylol wurde langsam zugetropft und das freigesetzte Methanol kontinuierlich durch Destillation aus der Reaktionsmischung entfernt. Nachdem die berechnete Menge Methanol abgetrennt wurde, wurde der Hauptteil des überschüssigen Allylalkohols bei 50°C unter vermindertem Druck (50-90 mbar) entfernt. Entfernung verbliebener Spuren Allylalkohol gelang bei 0,2 mbar bei Raumtemperatur. Das erhaltene Produkt, das durchschnittlich etwa fünf Allylethergruppen je Melaminkern aufwies, konnte ohne weitere Aufreinigung in der folgende Synthese eingesetzt werden.

Unter Stickstoff als Schutzgas wurden 12 g des erhaltenen Produkts zusammen mit 18,9 g Triethoxysilan in einem Glasreaktor vorgelegt und in 40 ml absolutem Toluol gelöst. Unter starkem Rühren wurden 400 µl einer Lösung von Ptdivinyltetramethyldisiloxan (2,1 % Pt) in Xylol der Fa. ABCR Gelest zugegeben und die Reaktionsmischung auf 60°C erwärmt. Nach 2 h wurden die Lösemittel bei 50°C unter vermindertem Druck abdestilliert.

Man erhiet ein farbloses bis leicht gelbliches Harz einer Viskosität bei Raumtemperatur von: 1,45 Pas

Farbzahlen: 241 Hazen; 2,4 Jod

### Beispiel 2

In einem Glasreaktor wurden 109 g Allylalkohol zusammen mit 1,47 g paraToluolsulfonsäure Monohydrat vorgelegt und auf 80-90°C erwärmt. Eine Lösung von 245 g Luwipal® 066 LF der BASF SE, Ludwigshafen in 100 ml Xylol wurde langsam zugetropft und das freigesetzte Methanol kontinuierlich durch Destillation aus der Reaktionsmischung entfernt. Nachdem die berechnete Menge Methanol abgetrennt wurde, wurde der Hauptteil des überschüssigen Allylalkohols bei 50°C unter vermindertem Druck (50-90 mbar) entfernt. Entfernung verbliebener Spuren Allylalkohol gelang bei 0,2 mbar bei Raumtemperatur. Das erhaltene Produkt wurde ohne weitere Aufreinigung in die folgende Synthese eingesetzt.

Unter Stickstoff als Schutzgas wurden 12 g des erhaltenen Produkts zusammen mit 11,3 g Triethoxysilan in einem Glasreaktor vorgelegt und in 40 ml absolutem Toluol gelöst. Unter starkem Rühren wurden 400 µl einer Lösung von Ptdivinyltetramethyldisiloxan (2,1% Pt) in Xylol der Fa. ABCR Gelest zugegeben und die Reaktionsmischung auf 60°C erwärmt. Nach 2 h wurden die Lösemittel bei 50°C unter vermindertem Druck abdestilliert.

Man erhielt ein farbloses bis leicht gelbliches Harz einer Viskosität bei Raumtemperatur von: 9,2 Pas

Farbzahl: 270 Hazen

### Beispiel 3

In einem Glasreaktor wurden 109 g Allylalkohol zusammen mit 1,47 g para-Toluolsulfonsäure Monohydrat vorgelegt und auf 80-90°C erwärmt. Eine Lösung von 245 g Luwipal® 066 LF der BASF SE, Ludwigshafen in 100 ml Xylol wurde langsam zugetropft und das freigesetzte Methanol kontinuierlich durch Destillation aus der Reaktionsmischung entfernt. Nachdem die berechnete Menge Methanol abgetrennt wurde, wurde der Hauptteil des überschüssigen Allylalkohols bei 50°C unter vermindertem Druck (50-90 mbar) entfernt. Entfernung verbliebener Spuren Allylalkohol gelang bei 0,2 mbar bei Raumtemperatur. Das erhaltene Produkt wurde ohne weitere Aufreinigung in die folgende Synthese eingesetzt.

Unter Stickstoff als Schutzgas wurden 12 g des erhaltenen Produkts zusammen mit 15,3 g Bis(trimethylsiloxy)methylsilan in einem Glasreaktor vorgelegt und in 40 ml absolutem Toluol gelöst. Unter starkem Rühren wurden 400 µl einer Lösung von Ptdivinyltetramethyldisiloxan (2,1 % Pt) in Xylol der Fa. ABCR Gelest zugegeben und die Reaktionsmischung auf 60°C erwärmt. Nach 2 h wurden die Lösemittel bei 50°C unter vermindertem Druck abdestilliert.

Man erhielt ein farbloses bis leicht gelbliches Harz einer Viskosität bei Raumtemperatur von: 0,7 Pas

Farbzahl: 472 Hazen (DIN EN 1557)

Bei dem eingesetzten Luwipal® 066LF der BASF SE handelt es sich um ein hoch bis vollständig methylverethertes Melamin-Formaldehyd-Harz mit einem nichtflüchtigen Anteil (gemäß ISO 3251, 2 g Probe mit 2 ml Butanol werden 2 Stunden bei 125 °C erwärmt) von 93 - 96 Gew% mit einem geringen Gehalt an freiem Formaldehyd von nicht mehr als 0,3 Gew%. Die Viskosität (ISO 3219 B) beträgt 2,0 - 6,0 Pas bei 23 °C und einer Scherrate D von 41,3 s⁻¹.

### Anwendungsbeispiele

Folgende Formulierungen wurden hergestellt und die daraus erhaltenen Lacke bzgl. Glanz und Glanzerhalt nach Crockmetertest charakterisiert.

Der Crockmetertest wurde nach EN ISO 105-X12:2001 durchgeführt. Es wurden je 10 5 cm lange Doppelhübe mit 9 µm 3M Schleifpapier und 9N Anpressdruck ausgeführt und der Glanz vor und nach der Belastung bei 20° quer zur Kratzrichtung gemessen. Der Restglanz wird dabei als prozentueller Anteil bezogen auf den Anfangsglanz angegeben.

Zusätzlich zu den in Tabelle 1 aufgeführten Bestandteilen, enthält jede Formulierung 1 ml Solvesso/nButanol (21:9) und 80 mg p-Toluolsulfonsäuremonohydrat gelöst in 0,3 ml Solvesso/nButanol (21:9).

| Probe | Komponente 1 | Menge [g] | Komponente 2 | Menge [g] | Komponente 3 | Menge [g] | Anfangsglanz | Restglanz [%] |
|---|---|---|---|---|---|---|---|---|
| 1 | Joncryl® 945 | 2 | Luwipal® 066 | 1 | - | - | 87,7 | 68,8 |
| 2 | Joncryl® 945 | 2 | Luwipal® 066 | 0,9 | Beispiel 3 | 0,1 | 85,6 | 79,2 |

| | | | | | | | | |
|---|---|---|---|---|---|---|---|---|
| 3 | Joncryl® 945 | 2 | Luwipal® 066 | 0,8 | Beispiel 3 | 0,2 | 84,5 | 86,9 |
| 4 | Joncryl® 945 | 2 | Luwipal® 066 | 0,7 | Beispiel 3 | 0,3 | 89,5 | 87,2 |
| 5 | Joncryl® 500 | 2 | Luwipal® 066 | 1 | - | - | 92,4 | 91,4 |
| 6 | Joncryl® 500 | 2 | Luwipal® 066 | 0,8 | Beispiel 3 | 0,2 | 98,4 | 89,4 |
| 7 | Joncryl® 500 | 2 | Luwipal® 066 | 0,8 | Beispiel 2 | 0,2 | 96,4 | 89,5 |
| 8 | Joncryl® 922 | 2 | Luwipal® 066 | 1 | - | - | 72,7 | 74,4 |
| 9 | Joncryl® 922 | 2 | Luwipal® 066 | 0,8 | Beispiel 3 | 0,2 | 90,2 | 88,2 |

Bei den Joncryl®-Produkten 945, 500 und 922 handelt es sich um Polyacrylatpolyole mit verschiedenen Hydroxyzahlen:
Joncryl® 945 besitzt eine OH-Zahl von 140 mg/KOH/g und eine Glasübergangstemperatur von 17 °C, Joncryl® 922 eine OH-Zahl von 140 mg/KOH/g und eine Glasübergangstemperatur von -7 °C und.
Man sieht, daß bei den Proben 1 bis 4 bei vergleichbarem Anfangsglanz bei den erfindungsgemäßen Proben ein verbesserter Restglanz erhalten wird, bzw. bei verbessertem Anfangsglanz (Proben 5 bis 7) ein vergleichbarer Restglanz.

Bei Probe 9 sind sowohl Anfangs- als auch Restglanz gegenüber der Vergleichsprobe 8 verbessert.

### Beispiel 4

In einem Glasreaktor wurden 3,12 g Luwipal 066 LF, 6,92 g 1,4-Pentadien-3-ol, 10 mg *p*-Toluolsulfonsäure und 10ml Toluol (anhydr.) unter Stickstoff auf 110°C erhitzt. Nachdem die berechnetet Menge Methanol abgetrennt wurde, wurde die Reaktionsmischung abgekühlt, durch Silicagel filtriert und mit Aceton (20 mL) eluiert. Nach Entfernen der organischen Lösungsmittel im Vakuum erhielt man das Produkt, das in die folgende Stufe eingesetzt wurde:
In einem Schlenkkolben unter Stickstoff wurde 7,45 g des aus der ersten Stufe erhaltenen Produkts in 20 ml Toluol (anhydr.) vorgelegt, 22,64 g Triethoxysilan und dann 0,1 ml des Pt-divinyltetramethyldisiloxan (2,1% Pt) in Xylol der Fa. ABCR Gelest bei Raumtemperatur zugetropft. Die Mischung wurde für 3 Stunden auf 60°C erwärmt. Nach dem Abkühlen wurd die Mischung durch Silicagel filtriert und mit Aceton (20 mL) eluiert. Am Rotationsverdampfer (max. 50°C) wurden die flüchtigen Bestandteile durch Destillation entfernt und nach dem Trocknen im Hochvakuum erhielt man das Produkt, das idealisiert im Folgenden dargestellt ist.

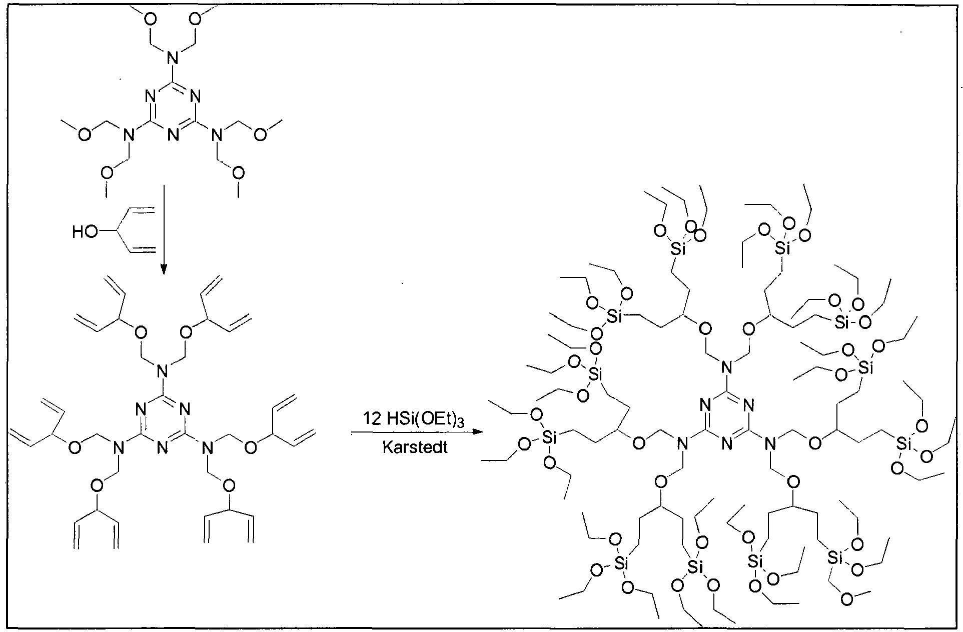

### Beispiel 5

Unter Stickstoff wurden 5,0 g des in Beispiel 1 aus der ersten Stufe erhaltenen Produktes in 15 ml Toluol(anhydr.) vorgelegt, 516,3 mg 1,1,3,3-Tetramethyldisiloxan und 0,04 ml des Pt-divinyltetramethyldisiloxan (2,1 % Pt) in Xylol der Fa. ABCR Gelest bei Raumtemperatur zugetropft. Die Mischung wurde für 3 Stunden auf 60°C erwärmt. Nach dem Abkühlen wurde die Mischung durch Silicagel filtriert und mit Aceton (10 mL) eluiert. Am Rotationsverdampfer (max. 50°C) wurden die flüchtigen Bestandteile durch Destillation entfernt und nach dem Trocknen im Hochvakuum erhielt man das Produkt, das in die Folgestufe eingesetzt wurde.

Unter Stickstoff wurden 3,96 g des erhaltenen Produktes in 10 ml Toluol (anhydr.)vorgelegt, 5,54 g HSi(OEt)₃ und 0,06 ml des Pt-divinyltetramethyldisiloxan (2,1% Pt) in Xylol der Fa. ABCR Gelest bei Raumtemperatur zugetropft. Die Mischung wurde für 3 Stunden auf 60°C erwärmt. Nach dem Abkühlen wurd die Mischung durch Silicagel filtriert und mit Aceton (10 mL) eluiert. Am Rotationsverdampfer (max. 50°C) wurden die flüchtigen Bestandteile destillativ entfernt und nach dem Trocknen im Hochvakuum erhält man das Produkt, das idealisiert im Folgenden dargestellt ist.

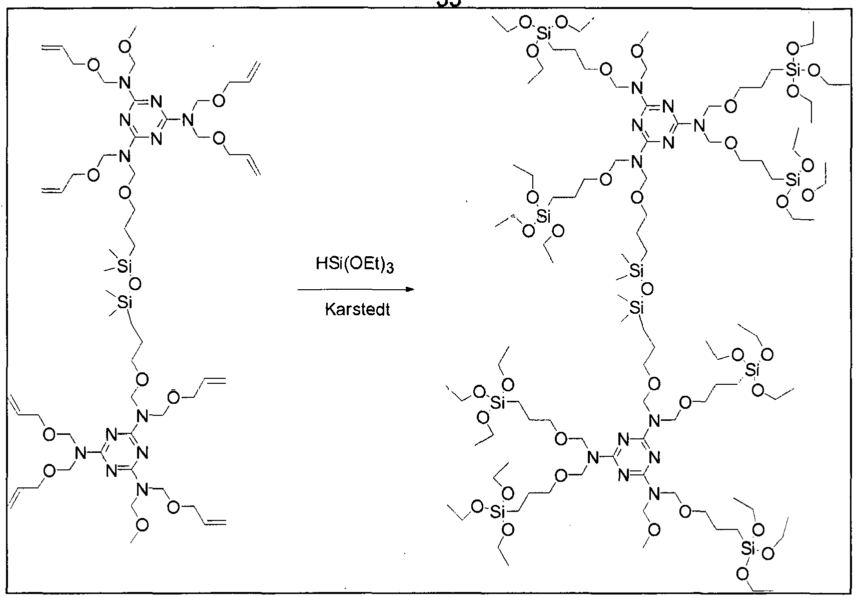

### Beispiel 6

In einem Glasreaktor wurden 80,51g Zimtalkohol, 234 mg p-Toluolsulfonsäure unter Stickstoff auf 95°C erhitzt. Es wurden 39,04 g Luwipal 066 LF in 250 ml Toluol (anhydr.) zugegeben. Nach 6h waren 21 ml Methanol abgetrennt. Nach dem Abkühlen wurde am Rotationsverdampfer das Lösungsmittel entfernt. Der Substitutionsgrad beträgt nach 1 H-NMR-Analyse 4.2.

Unter Stickstoff wurden 10 g des so erhaltenen etwa 4.2 fach mit Zimtalkohol substituierten Produktes in 200 ml Toluol(anhydr.) vorgelegt, 76 g Triethoxysilan und 6 ml des Pt-divinyltetramethyldisiloxan (2,1% Pt) in Xylol der Fa. ABCR Gelest bei 55-60°C in 30 min zugetropft. Die Mischung wurde für 3 Stunden auf 64.5°C erwärmt. Nach dem Abkühlen wurde die Mischung am Rotationsverdampfer (40°C) eingeengt. Man erhielt nach 1 H-NMR Analytik das zu etwa 10% silylierten mit Zimtalkohol substituierten Produktes.

### Beispiel 7

In 2000 ml Toluol (anhydr.) wurden 500g eines durchschnittlich etwa vier Allylethergruppen je Melaminkern aufweisenden Produktes analog Beispiel 2, 469,7 g Allylalkohol und 2,50 g p-Toluolsulfonsäure Hydrat vorgelegt. Die Mischung wurde auf 90-96°C erwärmt und der Substitutionsgrad via ¹H-NMR Analytik nach 6h auf 5.9 bestimmt. Nach dem Abkühlen wurde die Mischung am Rotationsverdampfer (40°C) eingeengt. Man erhält 502 g des gewünschten Produkts.

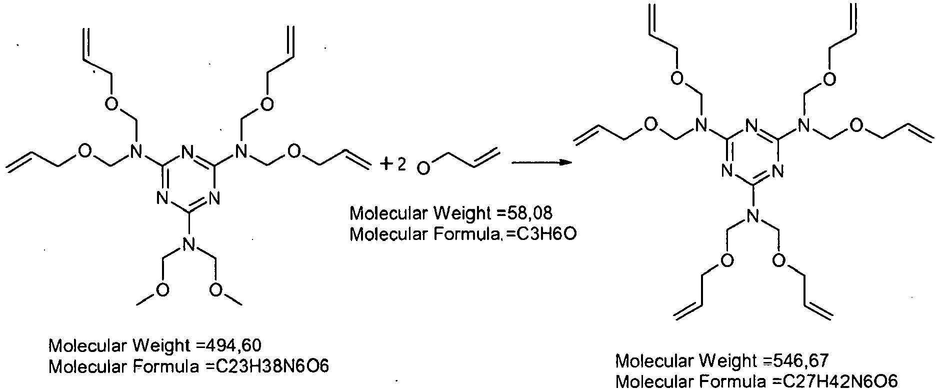

## Patentansprüche

1. Verfahren zur Herstellung von silylgruppentragenden Aminoplastharzen, **dadurch gekennzeichnet, daß** man
- in einem ersten Schritt mindestens ein optional verethertes Aminoplastharz (A) mit mindestens einem ungesättigten Alkohol (B), der mindestens eine C=C-Doppelbindung und mindestens eine Hydroxygruppe trägt, ver- oder umethert und
- anschließend an zumindest einen Teil der so an das Aminoplastharz gebundenen C=C-Doppelbindungen durch eine Hydrosilylierung mindestens eine Silanverbindung (C), die mindestens eine Si-H-Bindung trägt, addiert.

2. Verfahren gemäß Anspruch 1, **dadurch gekennzeichnet, daß** das Aminoplastharz ausgewählt ist aus der Gruppe bestehend aus Melamin-Formaldehyd-Harzen, Benzoguanamin/Formaldehydharzen und Harnstoff/Formaldehydharzen, die jeweils optional zumindest teilweise verethert sein können.

3. Verfahren gemäß einem der vorstehenden Ansprüche, **dadurch gekennzeichnet, daß** die Verbindung (B) genau eine C=C-Doppelbindung und genau eine Hydroxygruppe trägt.

4. Verfahren gemäß einem der vorstehenden Ansprüche, **dadurch gekennzeichnet, daß** Verbindung (B) ausgewählt ist aus der Gruppe bestehend aus 2-Propen-1-ol, 2-Methyl-2-propen-1-ol, 3-Buten-1-ol, 1-Buten-3-ol, 3-Methyl-2-buten-1-ol, 2-Methyl-3-buten-2-ol, 1-Octen-3-ol, 2-Hexen-1-ol, 1-Penten-3-ol, Phytol, Farnesol und Linalool.

5. Verfahren gemäß einem der vorstehenden Ansprüche, **dadurch gekennzeichnet, daß** Verbindung (C) die Formel 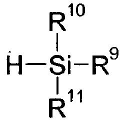 erfüllt, worin
R⁹ bis R¹¹ unabhängig voneinander bedeuten können
- einen Alkylrest oder
- einen Rest -O-R¹²,
- einen Rest der Formel (IIIa) 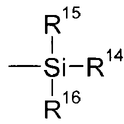 oder
- einen Rest der Formel (IIIb) 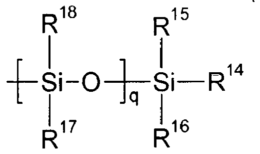
worin
R¹² ein Alkyl- oder Arylrest und
R¹⁴ bis R¹⁸ unabhängig voneinander Alkyl, Aryl, Alkyloxy, Aryloxy, Cycloalkyl und Cycloalkyloxy
bedeuten können.

6. Verfahren gemäß einem der vorstehenden Ansprüche, **dadurch gekennzeichnet, daß** die Hydrosilylierung durch ein Übergangsmetall der VIII. Nebengruppe katalysiert wird.

7. Verfahren gemäß Anspruch 6, **dadurch gekennzeichnet, daß** es sich bei dem Katalysator um Platin, Rhodium, Palladium, Cobalt und Nickel metallisch oder in Form eines Komplexes handelt.

8. Verfahren gemäß Anspruch 6, **dadurch gekennzeichnet, daß** es sich bei dem Katalysator um Platin-divinyltetramethyldisiloxan oder Hexachloroplatinsäurehydrat handelt.

9. Silylierte Melamin-Formaldehyd-Harze der Formel (I) 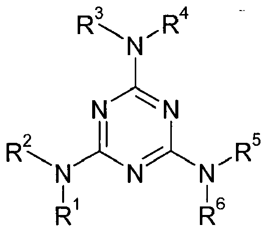 worin die Reste R¹ bis R⁶ jeweils unabhängig voneinander
a) ein Wasserstoffatom (-H) als Rest,
b) -[-CH₂-O-]ₘ-H,
worin m eine positive ganze Zahl von mindestens 1 bedeutet,
c) -[-CH₂-O-]ₙ-R⁷,
worin n eine positive ganze Zahl von mindestens 1 und
R⁷ einen Alkylrest bedeuten,
d) einen Rest der Formel (II) 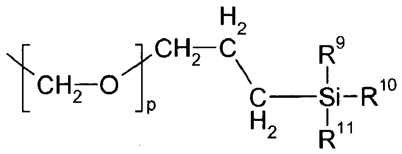 worin p eine positive ganze Zahl von mindestens 1,
R⁹ bis R¹¹ unabhängig voneinander bedeuten können
- einen Alkylrest oder
- einen Rest -O-R¹²,
worin
R¹² ein Alkyl- oder Arylrest
- einen Rest der Formel (IIIa) 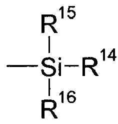 oder
- einen Rest der Formel (IIIb) 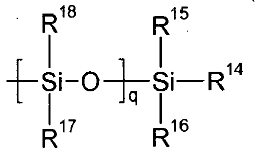
worin R¹⁴ bis R¹⁸ unabhängig voneinander bedeuten können Alkyl, Aryl, Alkyloxy, Aryloxy, Cycloalkyl und Cycloalkyloxy,
und q eine positive ganze Zahl von mindestens 1 bedeutet,
e) einen Rest der Formel (IV) 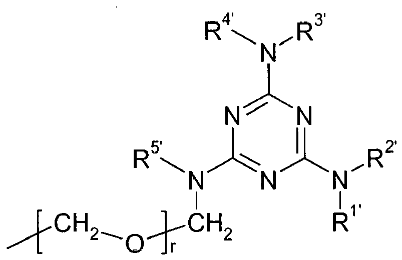 worin r Null oder eine positive ganze Zahl von mindestens 1 bedeuten kann und
die Reste R¹' bis R⁵' jeweils unabhängig voneinander ausgewählt sein können aus den Gruppen a) bis d),
bedeuten können,
mit der Maßgabe, daß mindestens einer der Reste R¹ bis R⁶, sowie der Reste R^{1'} bis R^{5'}, sofern sie anwesend sind, ein Rest der Formel (II) ist und nicht mehr als zwei Reste R¹ bis R⁶ jeweils einen Rest der Formel (IV) darstellen.

10. Silylierte Benzoguanamin-Formaldehyd-Harze der Formel (la) 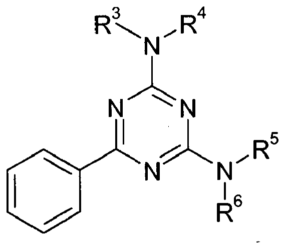 worin die Reste R³ bis R⁶ jeweils unabhängig voneinander
a) ein Wasserstoffatom (-H) als Rest,
b) -[-CH₂-O-]ₘ-H, worin m eine positive ganze Zahl von mindestens 1 bedeutet,
c) -[-CH₂-O-]ₙ-R⁷,
worin n eine positive ganze Zahl von mindestens 1 und
R⁷ einen Alkylrest bedeuten,
d) einen Rest der Formel (II) 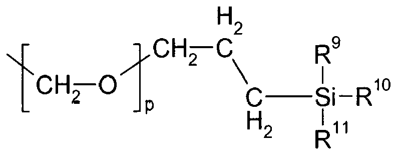 worin p eine positive ganze Zahl von mindestens 1, R⁹ bis R¹¹ unabhängig voneinander bedeuten können
- einen Alkylrest oder
- einen Rest -O-R¹²,
worin
R¹² ein Alkyl- oder Arylrest
- einen Rest der Formel (IIIa) 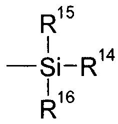 oder
- einen Rest der Formel (IIIb) 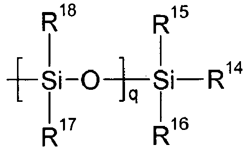
worin R¹⁴ bis R¹⁸ unabhängig voneinander bedeuten können Alkyl, Aryl, Alkyloxy, Aryloxy, Cycloalkyl und Cycloalkyloxy,
und q eine positive ganze Zahl von mindestens 1 bedeutet,
e) einen Rest der Formel (IVa) 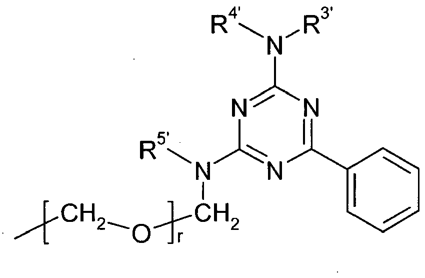
worin r Null oder eine positive ganze Zahl von mindestens 1 bedeuten kann und
die Reste R^{3'} bis R^{5'} jeweils unabhängig voneinander ausgewählt sein können aus den Gruppen a) bis d),
bedeuten können,
mit der Maßgabe, daß mindestens einer der Reste R³ bis R⁶, sowie der Reste R^{3'} bis R^{5'}, sofern sie anwesend sind, ein Rest der Formel (II) ist und nicht mehr als zwei Reste R³ bis R⁶ jeweils einen Rest der Formel (IVa) darstellen.

11. Beschichtungsmasse, enthaltend
mindestens ein silyliertes Aminoplastharz erhältlich gemäß einem der Ansprüche 1 bis 8,
gegebenenfalls mindestens entweder eine starke oder eine schwache Säure, gegebenenfalls mindestens ein Bindemittel
gegebenenfalls mindestens ein lacktypisches Additiv,
gegebenenfalls mindestens ein Lösungsmittel sowie gegebenenfalls mindestens ein Pigment.

12. Beschichtungsmasse gemäß Anspruch 12, **dadurch gekennzeichnet, daß** mindestens ein Bindemittel anwesend ist und dieses ausgewählt aus der Gruppe bestehend aus Polyetherolen, Polyesterolen, Polyacrylatpolyolen, Polycarbonatpolyolen, Alkydharzen und Epoxyharzen.

13. Verwendung von Beschichtungsmassen gemäß den Ansprüchen 11 oder 12 zum Beschichten von Holz, Papier, Textil, Leder, Vlies, Kunststoffoberflächen, Glas, Keramik, mineralischen Baustoffen, Metallen oder beschichteten Metallen.

14. Verwendung von Beschichtungsmassen gemäß den Ansprüchen 11 oder 12 als Grundierungen, Füller, pigmentierte Decklacke, Klarlacke, Industrie-, Holz-, Auto-, OEM- Lackierung oder Dekolackierung.

## Claims

1. A process for preparing an amino resin carrying silyl groups, which comprises
- in a first step, etherifying or transetherifying at least one optionally etherified amino resin (A) with at least one unsaturated alcohol (B) which carries at least one C=C double bond and at least one hydroxyl group, and
- subsequently, through a hydrosilylation, adding at least one silane compound (C) which carries at least one SiH bond to at least some of the C=C double bonds thus attached to the amino resin.

2. The process according to claim 1, wherein the amino resin is selected from the group consisting of melamine-formaldehyde resins, benzoguanamine/formaldehyde resins, and urea/formaldehyde resins, each of which may optionally be in at least partly etherified form.

3. The process according to either of the preceding claims, wherein the compound (B) carries just one C=C double bond and just one hydroxyl group.

4. The process according to any of the preceding claims, wherein compound (B) is selected from the group consisting of 2-propen-1-ol, 2-methyl-2-propen-1-ol, 3-buten-1-ol, 1-buten-3-ol, 3-methyl-2-buten-1-ol, 2-methyl-3-buten-2-ol, 1-octen-3-ol, 2-hexen-1-ol, 1-penten-3-ol, phytol, farnesol, and linalool.

5. The process according to any of the preceding claims, wherein compound (C) conforms to the formula 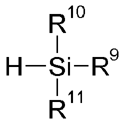 in which
R⁹ to R¹¹ may independently of one another be
- an alkyl radical or
- a radical -O-R¹²,
- a radical of the formula (IIIa) 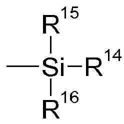 or
- a radical of the formula (IIIb) 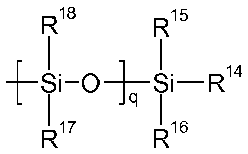 in which
R¹² may be an alkyl or aryl radical and
R¹⁴ to R¹⁸ independently of one another may be alkyl, aryl, alkyloxy, aryloxy, cycloalkyl, and cycloalkyloxy.

6. The process according to any of the preceding claims, wherein the hydrosilylation is catalyzed by a transition metal from transition group VIII.

7. The process according to claim 6, wherein the catalyst comprises platinum, rhodium, palladium, cobalt and/or nickel, in metallic form or in the form of a complex.

8. The process according to claim 6, wherein the catalyst comprises platinum-divinyltetramethyldisiloxane or hexachloroplatinic acid hydrate.

9. A silylated melamine-formaldehyde resin of the formula (I) 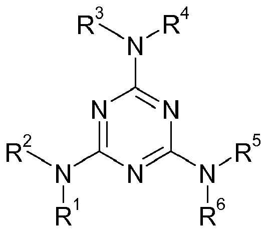 in which the radicals R¹ to R⁶ in each case independently of one another may be
a) a hydrogen atom (-H) as a radical,
b) -[-CH₂-O-]ₘ-H, in which m is a positive integer of at least 1,
c) -[-CH₂-O-]ₙ-R⁷,
in which n is a positive integer of at least 1 and
R⁷ is an alkyl radical,
d) a radical of the formula (II) 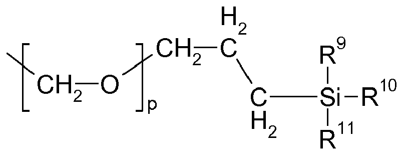 in which p is a positive integer of at least 1,
R⁹ to R¹¹ may independently of one another be
- an alkyl radical or
- a radical -O-R¹²,
in which
R¹² is an alkyl or aryl radical
- a radical of the formula (IIIa) 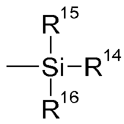 or
- a radical of the formula (IIIb) 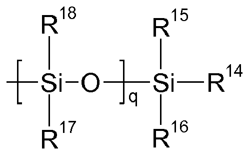
in which R¹⁴ to R¹⁸ independently of one another may be alkyl, aryl, alkyloxy, aryloxy, cycloalkyl, and cycloalkyloxy,
and q is a positive integer of at least 1,
e) a radical of the formula (IV) 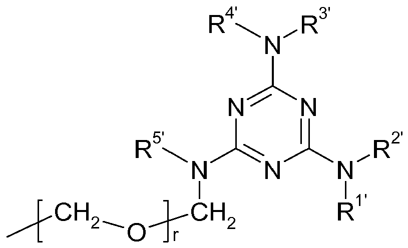 in which r may be zero or a positive integer of at least 1 and
the radicals R¹' to R⁵' may in each case independently of one another be selected from the groups a) to d),
with the proviso that at least one of the radicals R¹ to R⁶, and also of the radicals R¹' to R⁵', where present, is a radical of the formula (II), and not more than two radicals R¹ to R⁶ in each case are a radical of the formula (IV).

10. A silylated benzoguanamine-formaldehyde resin of the formula (Ia) 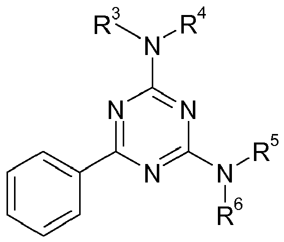 in which the radicals R³ to R⁶ in each case independently of one another may be
a) a hydrogen atom (-H) as a radical,
b) -[-CH₂-O-]ₘ-H,
in which m is a positive integer of at least 1,
C) -[-CH₂-O-]ₙ-R⁷,
in which n is a positive integer of at least 1 and
R⁷ is an alkyl radical,
d) a radical of the formula (II) 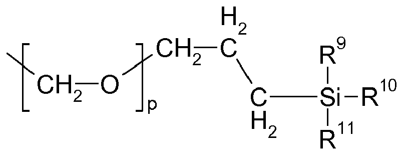 in which p is a positive integer of at least 1, R⁹ to R¹¹ may independently of one another be
- an alkyl radical or
- a radical -O-R¹²,
in which
R¹² is an alkyl or aryl radical
- a radical of the formula (IIIa) 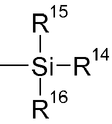 or
- a radical of the formula (IIIb) 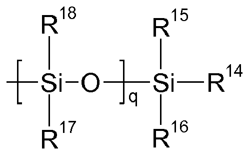
in which R¹⁴ to R¹⁸ independently of one another may be alkyl, aryl, alkyloxy, aryloxy, cycloalkyl, and cycloalkyloxy,
and q is a positive integer of at least 1,
e) a radical of the formula (IVa) 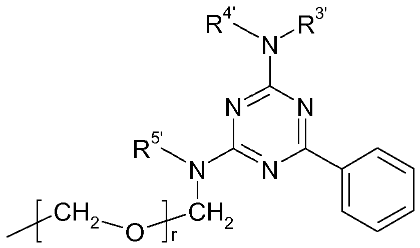 in which r may be zero or a positive integer of at least 1 and
the radicals R³, to R⁵, may in each case independently of one another be selected from the groups a) to d),
with the proviso that at least one of the radicals R³ to R⁶, and also of the radicals R³' to R⁵', where present, is a radical of the formula (II), and not more than two radicals R³ to R⁶ in each case are a radical of the formula (IVa).

11. A coating composition comprising
at least one silylated amino resin obtainable according to any of claims 1 to 8,
optionally at least either a strong or a weak acid,
optionally at least one binder,
optionally at least one typical coatings additive,
optionally at least one solvent, and
optionally at least one pigment.

12. The coating composition according to claim 11, wherein at least one binder is present and it is selected from the group consisting of polyetherols, polyesterols, polyacrylate polyols, polycarbonate polyols, alkyd resins, and epoxy resins.

13. The use of a coating composition according to claim 11 or 12 for coating wood, paper, textile, leather, nonwoven, plastics surfaces, glass, ceramic, mineral building materials, metals or coated metals.

14. The use of a coating composition according to claim 11 or 12 as a primer, surfacer, pigmented topcoat, clearcoat, industrial coating, wood coating, automotive coating, OEM coating or decorative coating.

## Revendications

1. Procédé pour la préparation de résines aminoplaste comportant des groupes silyle, **caractérisé en ce que**
- dans une première étape on éthérifie ou trans-éthérifie au moins une résine aminoplaste en option éthérifiée (A) avec au moins un alcool insaturé (B) qui comporte au moins une double liaison C=C et au moins un groupe hydroxy et
- ensuite on fixe par addition sur au moins une partie des doubles liaisons C=C ainsi liées à la résine aminoplaste, par une hydrosilylation, au moins un composé de type silane (C) qui comporte au moins une liaison Si-H.

2. Procédé selon la revendication 1, **caractérisé en ce que** la résine aminoplaste est choisie dans le groupe constitué par des résines mélamine-formaldéhyde, des résines benzoguanamine/formaldéhyde et des résines urée/formaldéhyde, qui peuvent chacune être en option au moins partiellement éthérifiées.

3. Procédé selon l'une quelconque des revendications précédentes, **caractérisé en ce que** le composé (B) comporte exactement une double liaison C=C et exactement un groupe hydroxy.

4. Procédé selon l'une quelconque des revendications précédentes, **caractérisé en ce que** le composé (B) est choisi dans le groupe constitué par le 2-propén-1-ol, le 2-méthyl-2-propén-1-ol, le 3-butén-1-ol, le 1-butén-3-ol, le 3-méthyl-2-butén-1-ol, le 2-méthyl-3-butén-2-ol, le 1-octén-3-ol, le 2-hexén-1-ol, le 1-pentén-3-ol, le phytol, le farnésol et le linalool.

5. Procédé selon l'une quelconque des revendications précédentes, **caractérisé en ce que** le composé (C) correspond à la formule 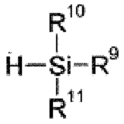 dans laquelle
R⁹ à R¹¹ peuvent représenter chacun indépendamment
- un radical alkyle ou
- un radical -O-R¹²,
- un radical de formule (IIIa) 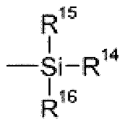 ou
- un radical de formule (IIIb) 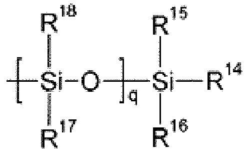 où
R¹² peut représenter un radical alkyle ou aryle et
R¹⁴ à R¹⁸ peuvent représenter indépendamment les uns des autres un groupe alkyle, aryle, alkyloxy, aryloxy, cycloalkyle ou cycloalkyloxy.

6. Procédé selon l'une quelconque des revendications précédentes, **caractérisé en ce que** l'hydrosilylation est catalysée par un métal de transition du groupe VIIIB.

7. Procédé selon la revendication 6, **caractérisé en ce que** le catalyseur consiste en platine, rhodium, palladium, cobalt ou nickel métallique ou sous forme d'un complexe.

8. Procédé selon la revendication 6, **caractérisé en ce que** le catalyseur consiste en platine-divinyltétraméthyldisiloxane ou en acide hexachloro-platinique hydraté.

9. Résines mélamine-formaldéhyde silylées de formule (I) 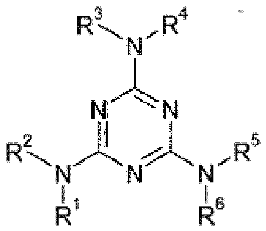 dans laquelle les radicaux R¹ à R⁶ peuvent représenter chacun indépendamment les uns des autres
a) un atome d'hydrogène (-H) en tant que radical,
b) -[-CH₂-O-]ₘ-H,
où m représente un nombre entier positif égal au moins à 1,
c) -[-CH₂-O-]ₙ-R⁷,
où n représente un nombre entier positif égal au moins à 1 et R⁷ représente un radical alkyle,
d) un radical de formule (II) 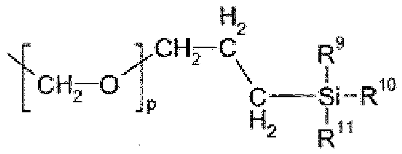 dans laquelle p peut représenter un nombre entier positif égal au moins à 1,
R⁹ à R¹¹ peuvent représenter chacun indépendamment
- un radical alkyle ou
- un radical -O-R¹²,
dans lequel
R¹² peut représenter un radical alkyle ou aryle
- un radical de formule (IIIa) 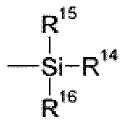 ou
- un radical de formule (IIIb) 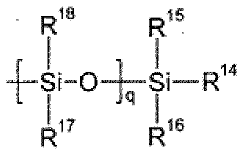 où R¹⁴ à R¹⁸ peuvent représenter indépendamment les uns des autres un groupe alkyle, aryle, alkyloxy, aryloxy, cycloalkyle ou cycloalkyloxy,
et q représente un nombre entier positif égal au moins à 1,
e) un radical de formule (IV) 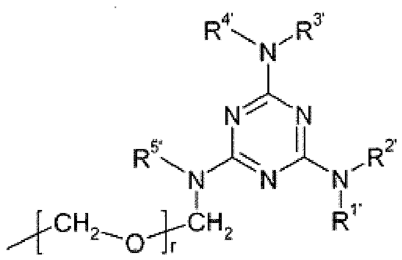
dans laquelle r peut représenter zéro ou un nombre entier positif égal au moins à 1 et
les radicaux R^{1'} à R^{5'} peuvent être choisis chacun indépendamment les uns des autres dans les groupes a) à d),
étant entendu qu'au moins l'un des radicaux R¹ à R⁶, ainsi que des radicaux R^{1'} à R^{5'} s'ils sont présents, est un radical de formule (II) et au maximum deux radicaux R¹ à R⁶ représentent chacun un radical de formule (IV).

10. Résines benzoguanamine-formaldéhyde silylées de formule (Ia) 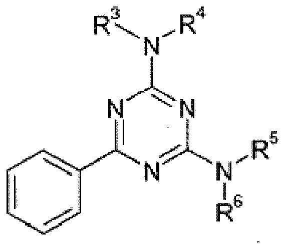 dans laquelle les radicaux R³ à R⁶ peuvent représenter chacun indépendamment les uns des autres
a) un atome d'hydrogène (-H) en tant que radical,
b) -[-CH₂-O-]ₘ-H,
où m représente un nombre entier positif égal au moins à 1,
c) -[-CH₂-O-]ₙ-R⁷,
où n représente un nombre entier positif égal au moins à 1 et R⁷ représente un radical alkyle,
d) un radical de formule (II) 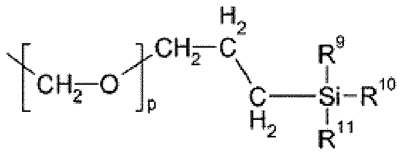 dans laquelle p peut représenter un nombre entier positif égal au moins à 1,
R⁹ à R¹¹ peuvent représenter chacun indépendamment
- un radical alkyle ou
- un radical -O-R¹²,
dans lequel
R¹² peut représenter un radical alkyle ou aryle
- un radical de formule (IIIa) 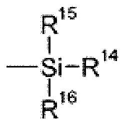 ou
- un radical de formule (IIIb) 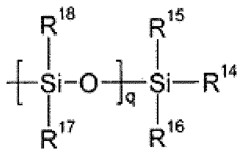
où R¹⁴ à R¹⁸ peuvent représenter indépendamment les uns des autres un groupe alkyle, aryle, alkyloxy, aryloxy, cycloalkyle ou cycloalkyloxy,
et q représente un nombre entier positif égal au moins à 1,
e) un radical de formule (IVa) 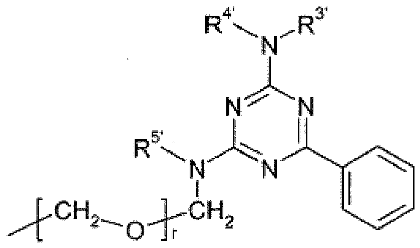
dans laquelle r peut représenter zéro ou un nombre entier positif égal au moins à 1 et
les radicaux R^{3'} à R^{5'} peuvent être choisis chacun indépendamment dans les groupes a) à d),
étant entendu qu'au moins l'un des radicaux R³ à R⁶, ainsi que des radicaux R^{3'} à R^{5'}, s'ils sont présents, est un radical de formule (II) et au maximum deux radicaux R³ à R⁶ représentent chacun un radical de formule (IVa) .

11. Matière de revêtement, contenant au moins une résine aminoplaste silylée pouvant être obtenue selon l'une quelconque des revendications 1 à 8,
éventuellement au moins soit un acide fort, soit un acide faible,
éventuellement au moins un liant,
éventuellement au moins un additif type pour peintures, éventuellement au moins un solvant ainsi qu'éventuellement au moins un pigment.

12. Matière de revêtement selon la revendication 11, **caractérisée en ce qu'**au moins un liant est présent et ce dernier est choisi dans le groupe constitué par des polyétherols, des polyesterols, des polyacrylatepolyols, des polycarbonatepolyols, des résines alkyde et des résines époxy.

13. Utilisation de matières de revêtement selon la revendication 11 ou 12, pour l'enduction du bois, du papier, de textile, du cuir, de non-tissé, de surfaces de matière plastique, du verre, de céramique, de matériaux de construction minéraux, de métaux ou de métaux revêtus.

14. Utilisation de matières de revêtement selon la revendication 11 ou 12, en tant que primaires, apprêts de garnissage, peintures de finition pigmentées, vernis, revêtement de peinture ou revêtement de peinture décorative pour l'industrie, le bois, l'automobile, des pièces OEM.
